# EUROPÄISCHE PATENTSCHRIFT

(11) **EP 4 152 452 B1**
(45) Veröffentlichungstag und Bekanntmachung des Hinweises auf die Patenterteilung: **01.05.2024**
(21) Anmeldenummer: 21197541.2
(22) Anmeldetag: 17.09.2021
(51) Int. Cl.: H01M 8/2404, B65H 31/38, H01M 10/04

(54) **POSITIONIERVORRICHTUNG, STAPELVORRICHTUNG UND STAPELVERFAHREN FÜR WIEDERHOLKOMPONENTEN EINES ZELLSTAPELS FÜR BATTERIE- ODER BRENNSTOFFZELLEN**
POSITIONING DEVICE, STACKING DEVICE AND STACKING METHOD FOR REPEAT COMPONENTS OF A CELL STACK FOR BATTERY OR FUEL CELLS
DISPOSITIF DE POSITIONNEMENT, DISPOSITIF D'EMPILEMENT ET PROCÉDÉ D'EMPILEMENT POUR COMPOSANTS D'UN EMPILEMENT D'ÉLÉMENTS DE BATTERIE OU DE PILES À COMBUSTIBLE

(43) Veröffentlichungstag der Anmeldung: 22.03.2023
(73) Patentinhaber: Grob-Werke GmbH & Co. KG, 87719 Mindelheim (DE)
(72) Erfinder: BIBERACHER, Tobias, 86505 Münsterhausen (DE); STOLZ, Joachim, 87754 Kammlach (DE); RATHGEB, Michael, 86152 Augsburg (DE); JANUSCH, Tim, 87746 Erkheim (DE)
(74) Vertreter: KASTEL Patentanwälte PartG mbB

(56) Entgegenhaltungen:
- WO-A1-2015/065082
- WO-A1-2020/216758

## Beschreibung

Die Erfindung betrifft eine Positioniervorrichtung zum Positionieren aufeinander zu legender Wiederholkomponenten eines Zellstapels für Batterie- oder Brennstoffzellen. Weiter betrifft die Erfindung eine Stapelvorrichtung zum Bilden eines Zellstapels für eine Batteriezelle oder Brennstoffzelle aus aufeinander zu legenden Wiederholkomponenten mit wenigstens einer solchen Positioniervorrichtung. Schließlich betrifft die Erfindung ein Stapelverfahren unter Verwendung einer solchen Stapelvorrichtung.

Zur Begriffsklärung und zum technologischen Hintergrund wird auf folgende Literaturstellen verwiesen:
[1] Wikipedia Akkumulator
[2] Wikipedia Brennstoffzelle
[3] Unveröffentlichte EP-Patentanmeldung EP21159734.9
[4] Unveröffentlichte DE-Anmeldung DE 10 2020 133 413.3
[5] WO 2020 21 6758 A1
[6] DE 38 14 413 A1
[7] DE 41 30 332 A1
[8] DE 10 2005 044 706 A1
[9] DE 27 23 162 A1
[10] DE 10 2016 213 149 A1
[11] EP 0 327 208 A2
[12] EP 0 561 069 A1
[13] EP 1 689 015 A1
[14] WO 2015 065082 A1

Aus den Literaturstellen [6] bis [9] sind Vorrichtungen und Verfahren aus der Papiertechnologie zum Handhaben von Papierbögen in einem Papierstapel bekannt.

Dagegen liegt die vorliegende Erfindung auf den Gebieten der Herstellung von Batteriezellen-Stacks (vorzugsweise vom Typ: Lithium-Ionen-Zelle), siehe [1], sowie der Herstellung von Brennstoffzellen-Stacks (vorzugsweise vom Typ: PEMFC), siehe [2]. Bevorzugte Ausführungsformen der Erfindung betreffen ein System für die Aufnahme, Positionierung und Fixierung aller für den Aufbau bzw. der Herstellung von Batteriezellen, wie z.B. Lithium-lonen-Batteriezellen, oder Brennstoffzellen-Stacks, wie z.B. PEMFC-Stacks, erforderlichen Komponenten, im Hinblick auf eine Fertigung in einer Großserienanlage.

Bisher bekannte Vorrichtungen und Verfahren zum Stapeln von Wiederholkomponenten von Batteriezellen oder Brennstoffzellen sind in den Literaturstellen [5] und [10] bis [14] beschrieben. Insbesondere aus [5] ist es bekannt, Wiederholkomponenten mittels Vibration zu positionieren.

Die Erfindung hat sich zur Aufgabe gestellt, eine Positioniervorrichtung bereitzustellen, mit der sich Wiederholkomponenten von Batterie- oder Brennstoffzellen bei schneller Prozessgeschwindigkeit in Großserie prozesssicherer und präziser bei der Ablage zu einem Stapel positionieren lassen.

Zum Lösen dieser Aufgabe schafft die Erfindung eine Stapelvorrichtung gemäß Anspruch 1. Eine Stapelvorrichtung mit einer solchen Positioniervorrichtung und ein damit durchführbares Stapelverfahren sind Gegenstand der Nebenansprüche.

Vorteilhafte Ausgestaltungen sind Gegenstand der Unteransprüche.

Die Erfindung schafft gemäß einem ersten Aspekt davon eine Positioniervorrichtung zum Positionieren aufeinander zu legender Wiederholkomponenten eines Zellstapels für Batterie- oder Brennstoffzellen, umfassend eine mittels wenigstens eines Vibrationserzeugers in Schwingung versetzbare Rüttelbacke mit einer Rüttelbacken-Anlagefläche zur Anlage an einen Rand der zu legenden Wiederholkomponente, um diese rüttelnd zu zentrieren, und eine unter einem oberen Bereich der Rüttelbacke angeordnete im Betrieb starre Positionierbacke mit einer Positionierbacken-Anlagefläche zum Anlegen an einen Rand des zu bildenden Zellstapels um diese in Position zu halten, wobei
a) die Positionierbacke und die Rüttelbacke an einem die Anlageflächen bildenden Backenbereich eine komplementäre Vorsprungs-Rücksprungsausbildung aufweisen, mit der die Positionierbacke und die Rüttelbacke ineinandergreifen und/oder
b) die Rüttelbacke dazu ausgebildet ist, einen nahe der Positionierbacken-Anlagefläche angeordneten Endbereich der Rüttelbacken-Anlagefläche beim Schwingen entlang einer Bogenbahn zu bewegen, wobei eine Tangente der Bogenbahn auf der Positionierbacken-Anlagefläche liegt.

Es ist bevorzugt, dass die Vorsprungs-Rücksprungsausbildung eine Kammstruktur mit zwischen Zähnen gebildeten Nuten ist, wobei Rüttelbacken-Zähne in Positionierbacken-Nuten eingreifen und Positionierbacken-Zähne in Rüttelbacken-Nuten eingreifen, wobei die Anlagenflächen zumindest teilweise an den Zähnen ausgebildet sind.

Insbesondere bei der Ausführung nach der Alternative b) kann die Vorsprungs-Rücksprungsausbildung auch einen einzelnen Vorsprung an einer der Backen - Positionier- und Rüttelbacke - aufweisen, der in einen Rücksprung an der anderen der Backen - Positionier- und Rüttelbacke - eingreift. Zum Beispiel kann ein Positionierbacken-Zahn in eine Rüttelbacken-Nut eingreifen. Es kann auch ein Zahn an der Rüttelbacke und ein Zahn an der Positionierbacke und komplementär hierzu eine Nut an der Rüttelbacke und eine Nut an der Positionierbacke vorgesehen sein.

Es ist bevorzugt, dass die Vorsprungs-Rücksprungsausbildung sich über die gesamte Breite der Anlageflächen erstreckt.

Es ist bevorzugt, dass sich eine erste Anordnung aus einer ersten Positionierbacke und einer ersten Rüttelbacke und eine zweite Anordnung aus einer zweiten Positionierbacke und einer zweiten Rüttelbacke an einem ersten Paar gegenüberliegenden Seiten einer Aufnahme für den Zellstapel gegenüberstehen.

Es ist bevorzugt, dass sich eine dritte Anordnung aus einer dritten Positionierbacke und einer dritten Rüttelbacke und eine vierte Anordnung aus einer vierten Positionierbacke und einer vierten Rüttelbacke an einem zweiten Paar gegenüberliegender Seiten der Aufnahme für den Zellstapel gegenüberstehen.

Es ist bevorzugt, dass die Vibrationserzeuger unterschiedlicher Anordnungen einzeln und/oder unterschiedlich ansteuerbar sind. Vorzugsweise kann die Bewegung paarweise gegenläufig oder gleichläufig oder im Einzelnen inaktiv sein. Demgemäß ist bevorzugt, dass eine Steuerung dazu ausgebildet ist, die Vibrationserzeuger derart anzusteuern, dass die Bewegung der Vibrationserzeuger paarweise gegenläufig erfolgt oder die Bewegung der Vibrationserzeuger paarweise gleichläufig erfolgt, oder dass einzelne Vibrationserzeuger inaktiv sind.

Es ist bevorzugt, dass die Rüttelbacke im Querschnitt U-förmig ausgebildet ist mit einem ersten Schenkel, an dem die Rüttelbacken-Anlagefläche und die Vorsprung-Rücksprung-Ausbildung ausgebildet ist, und einem zweiten Schenkel, der an den Vibrationserzeuger angeschlossen ist, und einem Steg, der einen Körper der Positionierbacke übergreift.

Vorzugsweise hat der zweite Schenkel ebenfalls eine Vorsprungs-Rücksprungsausbildung.

Es ist bevorzugt, dass die Positionierbacke an einem oberen Endbereich oberhalb der Positionierbacken-Anlagefläche zum Bilden einer Einführschräge abgeschrägt oder abgerundet ist.

Es ist bevorzugt, dass die Positionierbacke an einem oberen Endbereich der Positionierbacken-Anlagefläche entsprechend bündig zu oder ausgerichtet mit der Bogenbahn abgerundet ist.

Es ist bevorzugt, dass die Positionierbacke blockförmig oder leistenförmig ausgebildet ist.

Es ist bevorzugt, dass die Positionierbacke derart ausgebildet ist, dass an einer einer Aufnahme zur Aufnahme des Zellstapels zugewandten Seitenfläche die Vorsprung-Rücksprungausbildung ausgebildet ist.

Es ist bevorzugt, dass die Positionierbacke sich entlang einer Höhenrichtung zur Führung der Kanten der Wiederholkomponenten in dem Zellstapel beim Höhennachführen in der Aufnahme erstreckt.

Es ist bevorzugt, dass die Rüttelbacke zwischen einer ersten Endposition, in der die Rüttelbacken-Anlagefläche und die Positionierbacken-Anlagefläche zueinander ausgerichtet sind und einer zweiten Endposition, in der die Rüttelbacken-Anlagefläche zumindest bereichsweise weiter entfernt von einer Aufnahme für den Zellstapel ist als die Positionierbacken-Anlagefläche, schwingt.

Es ist bevorzugt, dass die Rüttelbacke an einer Lagerung, die ein Vorspannelement und wenigstens einen vorzugsweise einstellbaren Anschlag aufweist, zwischen zwei Endpositionen bewegbar gelagert ist.

Es ist bevorzugt, dass die Rüttelbacke an wahlweise veränderbaren Verbindungsstellen mit dem Vibrationserzeuger oder wahlweise mit mehreren Vibrationserzeugern verbindbar ist, um Eigenfrequenzen einzustellen.

Es ist bevorzugt, dass die Rüttelbacke senkrecht zu der Rüttelbackenanlagefläche linear hin und her schwingbar ist.

Es ist bevorzugt, dass die Rüttelbacke um eine horizontal und parallel zur Rüttelbacken-Anlagefläche ausgerichtete Achse herum schwingt.

Es ist bevorzugt, dass die Rüttelbacke sich beim Schwingen um eine horizontal und parallel zur Rüttelbacken-Anlagefläche ausgerichtete Achse herum hin und her dreht.

Wie oben bereits erwähnt ist bevorzugt, dass die Rüttelbacken paarweise gegenläufig oder gleichläufig bewegt werden oder im Einzelnen inaktiv sind.

Gemäß einem weiteren Aspekt schafft die Erfindung eine Stapelvorrichtung zum Bilden eines Zellstapels für eine Batteriezelle oder Brennstoffzelle aus aufeinander zu legenden Wiederholkomponenten, umfassend wenigstens eine Positioniervorrichtung nach einer der voranstehenden Ausgestaltungen und eine Aufnahme mit einer sich in Höhenrichtung bewegbaren Stützeinrichtung zum Abstützen und zur Höhenanpassung des Zellstapels beim Stapeln.

Gemäß einem weiteren Aspekt schafft die Erfindung ein Stapelverfahren zum Bilden eines Zellstapels für eine Batteriezelle oder Brennstoffzelle aus mehreren aufeinander zu legenden Wiederholkomponenten umfassend
a) Vorsehen einer Stapelvorrichtung gemäß der voranstehenden Ausgestaltung,
b) Ablegen einer Wiederholkomponente,
c) Zentrieren der Wiederholkomponente mittels Schwingen der Rüttelbacke, um sie in Anlage an die Positionerbacken-Anlagefläche zu bringen,
e) Wiederholen der Schritte a) bis c) mit weiteren Wiederholkomponenten, um so den Zellstapel zu bilden.

Vorzugsweise umfasst das Stapelverfahren den nach Schritt c) durchzuführenden Schritt:
d) Abwärtsbewegen der Stützeinrichtung,
wobei in Schritt e) die Schritte a) bis d) mit den weiteren Wiederholkomponenten wiederholt werden.

Einige Vorteile und weitere mögliche Merkmale bevorzugter Ausgestaltungen der Erfindung werden im Folgenden näher erläutert.

Eine bevorzugte Ausgestaltung der Erfindung betrifft eine Positioniervorrichtung für eine Vorrichtung zur Stapelung von Zellkomponenten bzw. (laminierten oder geklebten) Zellstacks. Auch wird eine mit einer solchen Positioniervorrichtung versehene Stapelvorrichtung beschrieben.

Die Verwendung von Vibration zur Ausrichtung von Komponenten, sowohl bei der Herstellung von Lithium-Ionen-Batteriezellen, als auch für die Herstellung von Brennstoffzellen-Stacks (PEMFC-Stacks) wurde bereits durch die Literaturstelle [5] (Vorrichtung zur Stapelung von laminierten bzw. geklebten Zellstacks) beschrieben.

Eine Stapelvorrichtung gemäß einer bevorzugten Ausgestaltung der Erfindung dient vorzugsweise zur Aufnahme, Positionierung und Fixierung aller Komponenten eines Lithium-Ionen-Batteriezellen-Stacks bzw. eines Brennstoffzellen-Stacks (Typ: PEMFC-Stack) während des Herstellungsprozesses.

Beim Herstellen eines Brennstoffstapels beispielsweise liegt ein Fokus auf dem alternierenden Einbringen der Wiederholkomponente/n Monozelle bzw. BPP und MEA, da dies den Haupanteil des Gesamtprozesses Stacking einnimmt. Weiter erfolgt meist auch ein vor- bzw. nachgelagertes Einlegen etwaiger Randkomponenten zum Abschluss der Stacks nach außen, dieser Schritt ist aus der Literatur bekannt und wird daher hier nicht näher betrachtet. Das Einlegen der Randkomponenten kann so erfolgen, wie dies in [3] und [4] beschrieben ist.

Bei dem Stand der Technik nach den veröffentlichten Literaturstellen erfolgt die Aufnahme und Positionierung der alternierenden Wiederholkomponente/n Monozelle bzw. BPP und MEA entweder durch starr montierte, unbewegliche Führungselemente oder alternativ durch Positionierbacken, die in der horizontalen Ebene, orthogonal zur Stapelrichtung in vertikaler Richtung, in Schwingung/Vibration gesetzt werden. Die Erzeugung der Vibration wird hierbei oftmals durch einen Rüttelmotor erzeugt.

Bei bekannten Vorrichtungen können zur Herstellung der Zellstacks ebenfalls automatische Handlingssysteme mit Pick-and-Place Anwendungen, bspw. mit Vakuumgreifer, für die Positionierung der Wiederholkomponente/n Monozelle bzw. BPP und MEA sowie Werkstückträger mit integrierten Niederhaltern, die die Wiederholkomponente/n nach dem Auflegen in der Position fixieren, eingesetzt werden und die Position ggf. mittels Bildverarbeitung überprüft werden.

Bei Ausgestaltungen der Erfindung erfolgt das Positionieren mittels Vibration von Rüttelbacken in Verbindung mit im Prozess stationären Positionierbacken. Damit ist eine Ausrichtung der einzelnen Komponenten exakt und prozesstechnisch einfach handhabbar möglich.

Aufgrund der kontinuierlich steigenden Nachfrage an Batteriezellen bzw. Brennstoffzellen und der erforderlichen Anzahl an Einzelzellen zur Generierung entsprechender elektrischer Leistungen sind demzufolge große Anzahlen an Einzelkomponenten erforderlich, welche präzise und mit hoher Prozessgeschwindigkeit übereinander zu Lithium-Ionen-Batteriezellen-Stacks bzw. PEMFC-Stacks gestapelt werden müssen. Um neben der elektrischen Leistung auch Betriebssicherheit zu garantieren, sind während der Assemblierung der Stacks bei immer geringer werdenden Taktzeiten immer präzisere Lagetoleranzen einzuhalten und der Schutz der Einzelkomponenten zu gewährleisten.

In Versuchen zum Ausrichten der geklebten bzw. laminierten Batteriezellstacks wurden u.a. Erkenntnisse erzielt, dass eine Ausrichtung mit aufgerichtetem Separator ohne eine bleibende Schädigung des Separators nicht möglich ist sowie jedoch eine Ausrichtung der einzelnen Zellstacklagen an der Separatorkante aber möglich ist, da die Zellstacks durch die Lamination bzw. das Verkleben der einzelnen Elektroden- und Separatorlagen eine gewisse Eigensteifigkeit aufweisen. Die Eigensteifigkeit des überstehenden Separators ist jedoch für eine Ausrichtung eines Stapel aus vielen Zellstacks nicht ausreichend, da sich nur die oberste/n Zellstacklage/n zentrieren lässt/lassen und die Haftreibung der einzelnen Lagen zueinander zu groß ist.

Mit bevorzugten Ausgestaltungen der Erfindung lässt sich durch, möglichst genaues, Übereinanderlegen einzelner verklebter bzw. laminierter Zellstapel bzw. Wiederholkomponenten ein Stack herstellen, der die hohen Anforderungen an die Lagegenauigkeit der einzelnen Schichten erfüllt. Die hohe Genauigkeit wird bei bevorzugten Ausgestaltungen der Erfindung bereits bei Positionierung der einzelnen Zellstapel übereinander erreicht, somit ist ein Ausrichten nach der Stapelbildung des kompletten Zellstapels nicht mehr notwendig.

Bei besonders bevorzugten Ausgestaltungen der Erfindung kann durch eine einfache Anpassung des Dynamikverhaltens der vibrierenden Komponenten (Rüttelbacke) zudem eine höhere Positionsgenauigkeit und damit gleichbedeutend eine höhere Leistungsdichte des Zellstacks bewirkt werden, insbesondere im Hinblick auf einen Formatwechsel. Dies wird vorzugsweise erreicht durch eine voneinander unabhängige Vibrationserzeugung in Längs- und Querrichtung in der horizontalen Ebene. Je nach Bedarf ist es durch eine Einzelaktorik möglich, optional die Vibrationen in Längs- bzw. Querrichtung mit unterschiedlicher Schwingfrequenz zu betreiben. So besteht auch die Möglichkeit eines teilweisen bzw. ganzheitlichen "inaktiven" Betriebs der Stapelvorrichtung.

Bei bevorzugten Ausgestaltungen einer Stapelvorrichtung gemäß Ausführungsbeispielen der Erfindung ist eine Positioniervorrichtung der Stapelvorrichtung aus mehreren Teilen aufgebaut. In einem oberen beweglichen Teil der Positioniervorrichtung wird/werden die Wiederholkomponente/n Monozelle bzw. BPP und MEA durch Vibration und gleichzeitiger Absenkbewegung in seitlich angebrachte Positionierbacken zentriert. Dabei sind als Zentrierbacken wirkende Rüttelbacken so ausgeführt, dass diese die Wiederholkomponente/n quer zur Absenkbewegung an der äußersten umlaufenden Kante der Wiederholkomponente/n, wie im Falle der Monozelle der Separatorkante, ausrichten.

Durch fortlaufende Absenkbewegung der Wiederholkomponente/n Monozelle bzw. BPP und MEA erfolgt die Übergabe der Wiederholkomponente/n an den unteren starren Teil der Positioniervorrichtung an eine Aufnahme mit stationären als Aufnahmebacken wirkenden Positionierbacken, ohne die Positionsgenauigkeit zu verlieren, da die als Zentrierbacken wirkenden Rüttelbacken des oberen Teils und die als Aufnahmebacken wirkenden Positionierbacken des unteren Teils kammförmig ineinander greifen.

Bei einer alternativen Ausgestaltung der Positioniervorrichtung und der damit versehenen Stapelvorrichtung kann die Übergabe vom beweglichen zum starren Teil der Positioniervorrichtung auch durch eine tangentiale Übergabe, bei Bewegung der Rüttelbacken entlang einer Bogenbahn, z.B. einer rotatorischen Bewegung, erfolgen.

Ein Vorteil einer Positioniervorrichtung gemäß bevorzugten Ausgestaltungen der Erfindung liegt darin, dass die Wiederholkomponente/n in einer höheren Positionsgenauigkeit zu einem Zellstack gestapelt wird/werden und nur die oberste/n Lage/n des Zellstack-Stapels ausgerichtet werden, wodurch die Gefahr von Beschädigungen der Wiederholkomponente/n und auch ein Positionsverlust reduziert werden kann. Zudem können durch dieses Stapelverfahren höhere Prozessgeschwindigkeiten realisiert werden, da alle Prozesse kontinuierlich laufen können, wodurch das Verfahren auch für die Serienfertigung anwendbar ist.

Des Weiteren lässt sich durch die flexible Auslegung des Vibrationsbereiches das Dynamikverhalten der Positioniereinheit, insbesondere durch die Anwendung von Körperschallwandler zur Vibrationserzeugung, einfach anpassen. Hierdurch und durch die einfache und kompakte Bauweise der Positioniervorrichtung lässt sich diese einfach und schnell auf andere Formatgrößen skalieren.

Ausführungsbeispiele der Erfindung werden im Folgenden anhand der beigefügten Zeichnungen näher erläutert. Darin zeigt:
- Fig. 1: eine perspektivische Ansicht einer ersten Ausführungsform einer Stapelvorrichtung zum Stapeln eines Zellstapels aus Wiederholkomponenten mit einer ersten Ausführungsform einer Positioniervorrichtung zur Positionierung der Wiederholkomponenten, zusammen mit einem Teil des Zellstapels in der Stapelvorrichtung;
- Fig. 2: eine Ansicht der Stapelvorrichtung gemäß der ersten Ausführungsform wie in Fig. 1, jedoch ohne Zellstapel;
- Fig. 3: eine Ansicht der Stapelvorrichtung wie in Fig. 1, wobei jedoch Vibrationseinheiten der Positioniervorrichtung weggelassen worden sind;
- Fig. 4: eine vergrößerte Detaildarstellung eines Eckbereichs der Stapelvorrichtung von Fig. 1;
- Fig. 5: eine Ansicht wie in Fig. 4, jedoch ohne Zellstapel;
- Fig. 6: einen Schnitt durch die Vibrationseinheit auf einer Seite der Positioniervorrichtung;
- Fig. 7: eine Seitenansicht eines Teils der Stapelvorrichtung von Fig. 1;
- Fig. 8: eine Detaildarstellung des Details A von Fig. 7;
- Fig. 9a bis Fig. 9d: Ansichten wie in Fig. 7 zu aufeinanderfolgenden Zeitpunkten beim Einfügen einer Wiederholkomponente;
- Fig. 10: eine perspektivische Ansicht des oberen Bereichs einer zweiten Ausführungsform einer Stapelvorrichtung zum Stapeln eines Zellstapels aus Wiederholkomponenten mit einer zweiten Ausführungsform einer Positioniervorrichtung zur Positionierung der Wiederholkomponenten, zusammen mit einem Teil des Zellstapels in der Stapelvorrichtung;
- Fig. 11: eine perspektivische Darstellung eines unteren Bereichs der Stapelvorrichtung gemäß der zweiten Ausführungsform;
- Fig. 12: eine perspektivische Ansicht der Stapelvorrichtung, bei der der obere Bereich und der untere Bereich zusammengesetzt sind;
- Fig. 13: eine perspektivische Darstellung einer von mehreren Vibrationseinheiten der Positioniereinrichtung gemäß der zweiten Ausführungsform;
- Fig. 14: eine Seitenansicht der Vibrationseinheit von Fig. 13;
- Fig. 15: eine Draufsicht der Vibrationseinheit von Fig 13;
- Fig. 16: einen Schnitt entlang der Linie C-C von Fig. 15;
- Fig. 17: eine perspektivische Ansicht eines Eckbereichs der Stapelvorrichtung von Fig. 12;
- Fig. 18: eine Seitenansicht einer Anordnung aus Rüttelbacke und Positionsbacke an dem Eckbereich von Fig. 17 beim Positionieren einer Wiederholkomponente; und
- Fig. 19: eine vergrößerte Darstellung de Details A von Fig. 18.

Unterschiedliche Ausführungsformen einer Stapelvorrichtung 10 zum Bilden eines Zellstapels 12 für eine Batteriezelle oder Brennstoffzelle aus mehreren aufeinander zu legenden Wiederholkomponenten 14, 16 werden nachfolgend anhand der Darstellung in den Zeichnungen näher erläutert.

Die Stapelvorrichtung 10 weist eine Aufnahme 18 zum Aufnehmen des Zellstapels 12 und eine Positioniervorrichtung 20 zum Positionieren der aufeinander zu legenden Wiederholkomponenten 14, 16 des Zellstapels 12 für Batterie- oder Brennstoffzellen auf.

Die Aufnahme 18 weist eine Stützeinrichtung 22 zum Abstützen des Zellstapels 12 beim Stapeln auf. Die Stützeinrichtung 22 kann bei einigen hier nicht näher dargestellten Ausführungsformen stationär sein. Vorzugsweise ist die Stützvorrichtung in Höhenrichtung bewegbar, um die Höhe des Zellstapels 12 beim Stapeln anzupassen.

Die Positioniervorrichtung 20 weist wenigstens eine bewegbare Einheit und eine stationäre Einheit auf.

Konkret weist die Positioniervorrichtung 20 als bewegbare Einheit wenigstens eine mittels wenigstens eines Vibrationserzeugers 24 in Schwingung versetzbare Rüttelbacke 26, 26a, 26a1, 26a2, 26b, 26b1, 26b2, 26c, 26d mit einer Rüttelbacken-Anlagefläche 28 zur Anlage an einen Rand der zu legenden Wiederholkomponente 14, 16, um diese rüttelnd zu zentrieren, und als stationäre Einheit wenigstens eine unter einem oberen Bereich 30 der Rüttelbacke 26, 26a, 26a1, 26a2, 26b, 26b1, 26b2, 26c, 26d angeordnete im Betrieb starre Positionierbacke 32, 32a, 32a1, 32a2, 32b, 32b1, 32b2, 32c, 32c1, 32c2, 32d, 32d1, 32d2 mit einer Positionierbacken-Anlagefläche 34 zum Anlegen an einen Rand des zu bildenden Zellstapels 12, um diesen in Position zu halten, auf.

Bei den dargestellten Ausführungsformen weist die Positioniervorrichtung 20 an jeder der hier vier Seiten a, b, c, d der Aufnahme 18 jeweils wenigstens eine Anordnung 36, 36a, 36a1, 36a2, 36b, 36b1, 36b2, 36c, 36d aus (wenigstens) einer Rüttelbacke 26, 26a, 26a1, 26a2, 26b, 26b1, 26b2, 26c, 26d und (wenigstens) einer Positionierbacke 32, 32a, 32a1, 32a2, 32b, 32b1, 32b2, 32c, 32c1, 32c2, 32d, 32d1, 32d2 auf, so dass sich jeweils wenigstens zwei derartiger Anordnungen 36, 36a, 36a1, 36a2, 36b, 36b1, 36b2, 36c, 36d gegenüberstehen.

Die Rüttelbacken 26, 26a, 26a1, 26a2, 26b, 26b1, 26b2, 26c, 26d und Vibrationserzeuger 24 zum Vibrieren der Rüttelbacken 26, 26a, 26a1, 26a2, 26b, 26b1, 26b2, 26c, 26d sind an wenigstens einer Vibrationseinheit 38, 38a, 38a1, 38a2, 38b, 38b1, 38b2, 38c, 38d der Positioniervorrichtung 20 vorgesehen.

Bei bevorzugten Ausführungsformen der Positioniervorrichtung 20 weisen die Positionierbacken 32, 32a, 32a1, 32a2, 32b, 32b1, 32b2, 32c, 32c1, 32c2, 32d, 32d1, 32d2 und die Rüttelbacken 26, 26a, 26a1, 26a2, 26b, 26b1, 26b2, 26c, 26d an einem die Anlageflächen 28, 34 bildenden Backenbereich 40 eine komplementäre Vorsprungs-Rücksprungsausbildung 42 auf, mit der die Positionierbacke 32, 32a, 32a1, 32a2, 32b, 32b1, 32b2, 32c, 32c1, 32c2, 32d, 32d1, 32d2 und die Rüttelbacke Rüttelbacken 26, 26a, 26a1, 26a2, 26b, 26b1, 26b2, 26c, 26d ineinandergreifen.

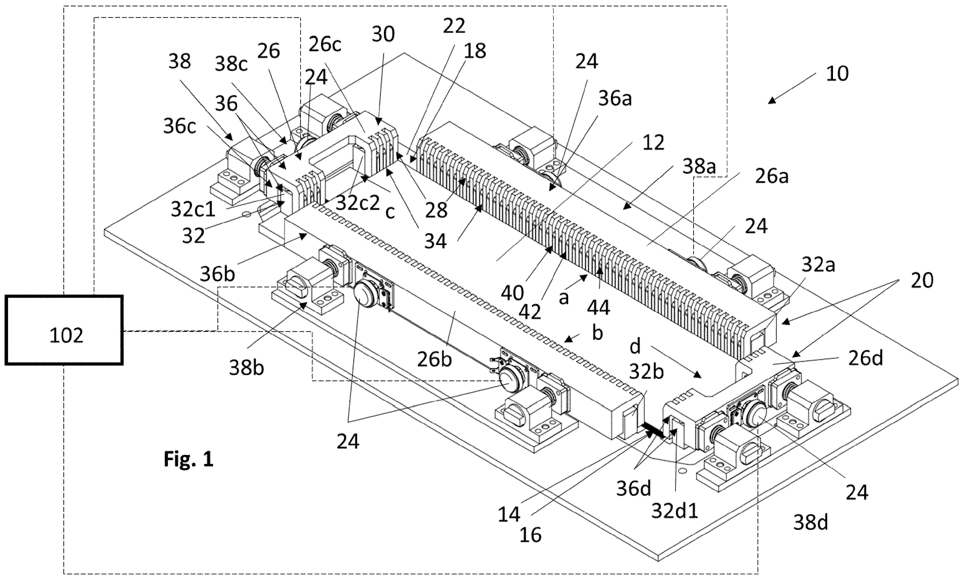

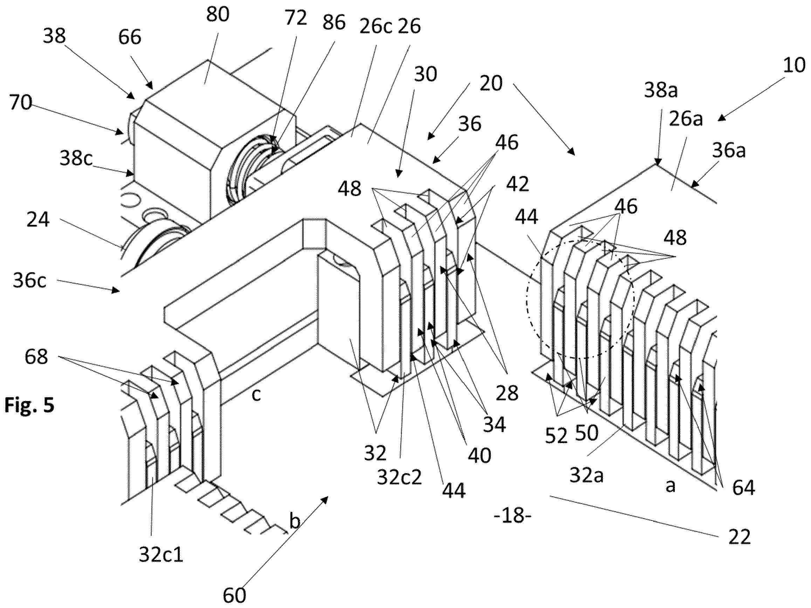

Bei einer ersten Ausführungsform, die in den Fig. 1 bis 9d dargestellt ist, ist die Vorsprungs-Rücksprungsausbildung 42 als Kammstruktur 44 mit Zähnen 46, 50 und Nuten 48, 52 dazwischen ausgebildet. Die Rüttelbacken 26, 26a, 26b, 26c, 26d sind hier linear, im Wesentlichen parallel zur Haupterstreckungsebene der auf dem Zellstapel 12 abgelegten Wiederholkomponenten 14, 16 beweglich.

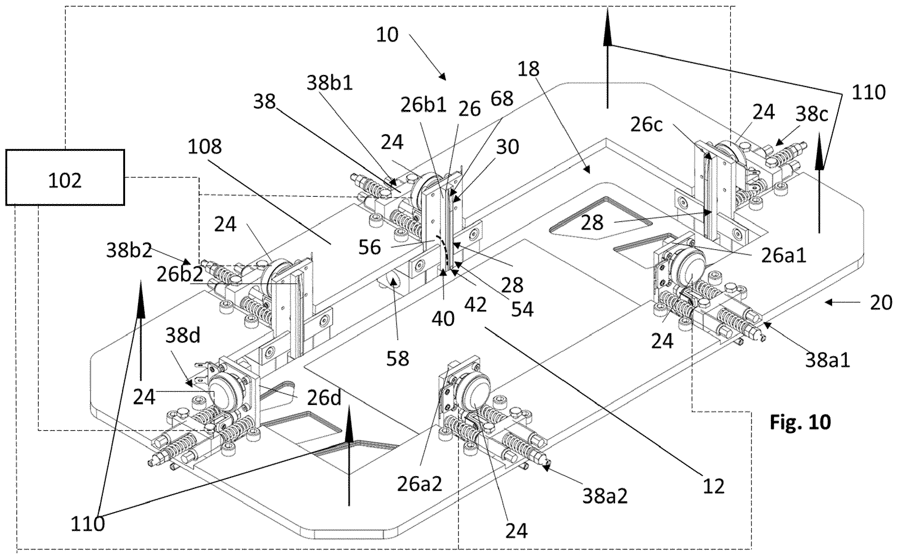

Bei einer zweiten Ausführungsform, die in den Fig. 10 bis 19 dargestellt ist, ist die wenigstens eine Rüttelbacke 26, 26a1, 26a2, 26b1, 26b2, 26c, 26d dazu ausgebildet, einen nahe der Positionierbacken-Anlagefläche 34 angeordneten Endbereich 54 der Rüttelbacken-Anlagefläche 28 beim Schwingen entlang einer Bogenbahn 56 zu bewegen, wobei eine Tangente der Bogenbahn 56 auf der Positionierbacken-Anlagefläche 34 liegt. Die Bogenbahn 56 kann z.B. mittels zweiachsiger Führung oder Kurvenbahnführung z.B. ellopsoid oder parabelförmig sein. Vorzugsweise ist die Bogenbahn 56 kreisförmig, wobei hierzu die Rüttelbacke 26, 26a1, 26a2, 26b1, 26b2, 26c, 26d um eine sich im Wesentlichen parallel zur Haupterstreckungsebene der auf dem Zellstapel 12 abgelegten Wiederholkomponenten erstreckende Achse 58 herum rotatorisch bewegt.

Auch die zweite Ausführungsform kann an ihren Anordnungen 36, 36a1, 36a2, 36b1, 36b2, 36c, 36d aus Rüttelbacke 26, 26a1, 26a2, 26b1, 26b2, 26c, 26d und Positionierbacke 32, 32a1, 32a2, 32b1, 32b2, 32c, 32d die komplementären Vorsprungs-Rücksprungs-Ausbildungen 42 aufweisen, dies ist aber nicht zwingend vorgesehen.

Im Folgenden werden die Stapelvorrichtung 10 und die Positioniervorrichtung 20 gemäß der ersten Ausführungsform anhand der Darstellung in den Fig. 1 bis 9d näher erläutert. Insbesondere ist Positioniervorrichtung 20 der zweiten Ausführungsform als lineare Variante mit linear beweglichen Rüttelbacken 26, 26a-26d ausgebildet.

Die Aufnahme 18 weist als Stützeinrichtung 22 einen Stapeltisch 60 auf, auf dem der Zellstapel 12 durch Aufeinanderlegen der Wiederholkomponenten abgelegt wird. Um den Stapeltisch 60 herum sind hier eine erste bis vierte Anordnung 36a-36d aus wenigstens einer Positionierbacke 32, 32a, 32b, 32c1, 32c2, 32d1, 32d2 und einer Rüttelbacke 26, 26a-26d paarweise gegenüberliegend vorgesehen.

Die Positioniervorrichtung 20 weist eine Grundplatte 62 auf, die hier rahmenförmig um den Stapeltisch 60 herum angeordnet ist. Auf der Grundplatte 62 sind die erste bis vierte Vibrationseinheit 32, 32a-32d befestigt.

Die Positionierbacken 32, 32a, 32b, 32c1, 32c2, 32d1, 32d2 der ersten bis vierten Anordnung 36a-36d sind auf dem Stapeltisch 60 stationär befestigt.

Somit weist die Stapelvorrichtung 10 als Hauptgruppen die Grundplatte 62 und die Aufnahme 18 mit einer durch die Positionierbacken 32, 32a, 32b, 32c1, 32c2, 32d1, 32d2 gebildeten stationären Positioniereinheit und mehreren Vibrationseinheiten 38, 38a-38d auf.

Die Grundplatte 62 dient dazu, die Vibrationseinheiten 38, 38a-38d aufzunehmen und unter Berücksichtigung aller Justiermöglichkeiten zu lagern. Die Grundplatte 62 ist geometrisch an die Aufnahme 18 angepasst. Die Aufnahme 18 mit den Positionierbacken 32, 32a, 32b, 32c1, 32c2, 32d1, 32d2 taucht von unten durch die Grundplatte 62 hindurch.

In der mit dem Stapeltisch 60 und den stationären Positionierbacken 32, 32a, 32b, 32c1, 32c2, 32d1, 32d2 versehenen Aufnahme 18 erfolgt die Stapelung der Wiederholkomponente/n 14, 16 zu einem Zellstapel 12, beispielsweise einem Zellstack. Die Aufnahme 18 kann hierbei in der vertikalen Ausrichtung zur Grundplatte 60 unterschiedlich positioniert werden. Unter Anwendung einer (bei der ersten Ausführungsform nicht dargestellten) Z-Achse mit Aktoren zur Positionierung der Aufnahme 18 ist es nun möglich, die Ablagehöhe bzw. Einwurfhöhe für alle Wiederholkomponenten 14, 16 beizubehalten. Hierzu taktet die Z-Achse nach dem Ablegen bzw. Einwerfen einer Wiederholkomponente 14, 16 um die entsprechende Materialdicke nach unten.

Darüber hinaus ermöglicht dies die Stapelbildung von Zellstacks in unterschiedlicher Höhe ohne die Vibrationseinheiten 38, 38a-38d anpassen zu müssen.

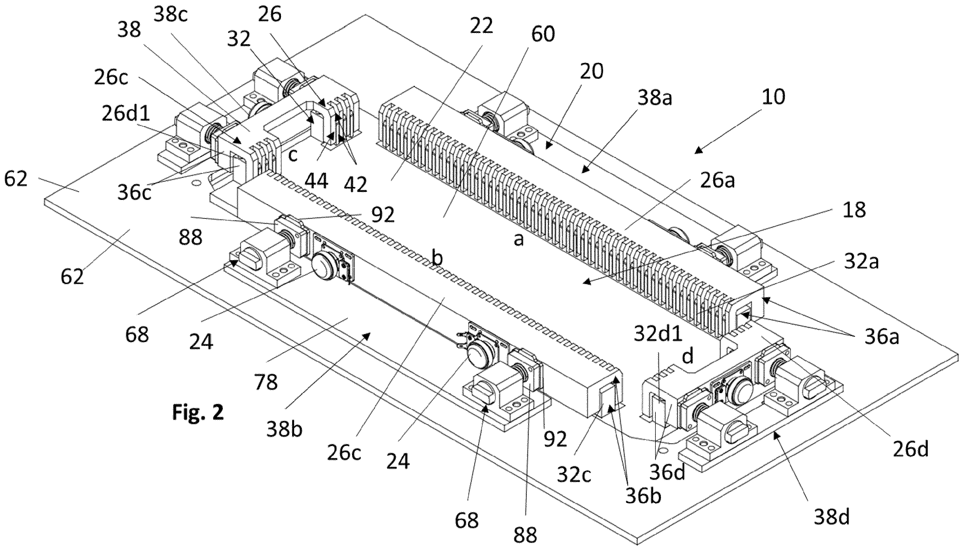

Fig. 1 zeigt die Stapelvorrichtung 10 mit der aus Positionierbacken 32, 32a, 32b, 32c1, 32c2, 32d1, 32d2 und den Vibrationseinheiten 38, 38a-38d mit Rüttelbacken 26, 26a-26d gebildeten Positioniervorrichtung 20 und dem Zellstapel 12. Fig. 2 zeigt den Prinzipaufbau der Stapelvorrichtung 10 ohne Zellstapel mit der Aufnahme 18 in der obersten Endlage.

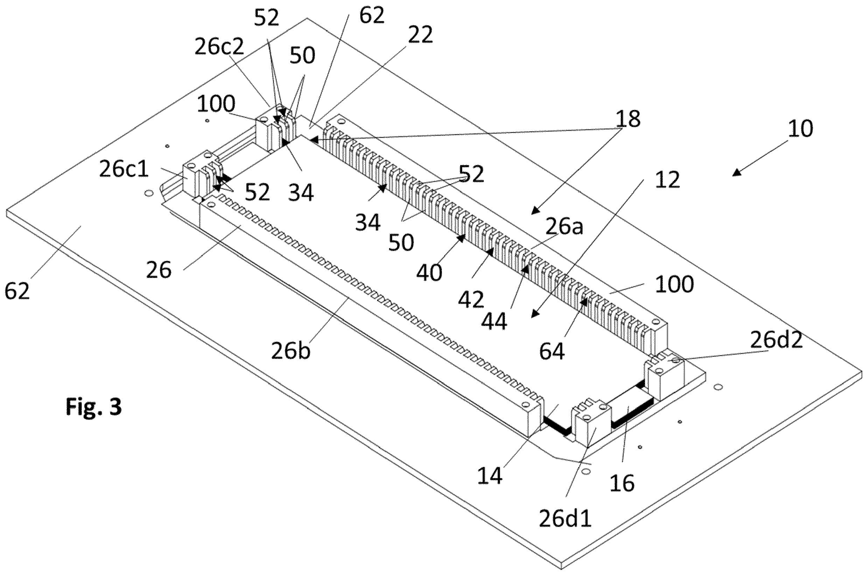

Wie oben bereits erwähnt und in den Fig. 2 und 3 gezeigt, weist die Aufnahme 18 den Stapeltisch 60 auf, an dem die mehreren Positionierbacken 32, 32a, 32b, 32c1, 32c2, 32d1, 32d2 befestigt sind. Die Positionierbacken 32, 32a, 32b, 32c1, 32c2, 32d1, 32d2 sind so am Umfang der Wiederholkomponente/n 14, 16 fest an dem Stapeltisch 60 angeordnet und können über die komplette Länge einer Seite - siehe die Positionierbacke 32a, 32b der ersten und zweiten Anordnung 36a, 36b - oder nur über einen Teilbereich einer Seite c, d - siehe die Positionierbacken 28c1, 28c2, 28d1, 28d2 der dritten und vierten Anordnung 36c, 36d - angeordnet werden, dass die Stapelbildung eines Zellstapels 12 innerhalb der Positionierbacken 32, 32a, 32b, 32c1, 32c2, 32d1, 32d2 erfolgt. Dabei ist es auch möglich mehrere Positionierbacken 28c1, 28c2, 28d1, 28d2 an einer Seite anzuordnen.

Die Positionierbacken 32, 32a, 32b, 32c1, 32c2, 32d1, 32d2 dienen dazu einen Zellstapel 12 aufzunehmen und in Position zu bringen und in Position zu halten. Für ein störungsfreies und verschleißfreies Einführen der Wiederholkomponente/n 14, 16 durch Ablegen bzw. Einwerfen sind die Positionierbacken 32, 32a, 32b, 32c1, 32c2, 32d1, 32d2 im oberen Bereich mit einer Einführphase - hier dargestellt als Einführschräge 64, kann auch abgerundet ausgebildet sein - ausgeführt.

Die Vibrationseinheiten 38, 38a-38d als oberer Teil der Stapelvorrichtung 10 und der Positioniervorrichtung 20 werden, wie die Positionierbacken 32, 32a, 32b, 32c1, 32c2, 32d1, 32d2, so am Umfang der Wiederholkomponente 14, 16 fest an der Grundplatte 60 angeordnet, dass die Stapelbildung eines Zellstapels 12 innerhalb der Vibrationseinheiten 38, 38a-38d erfolgt (siehe Fig. 1).

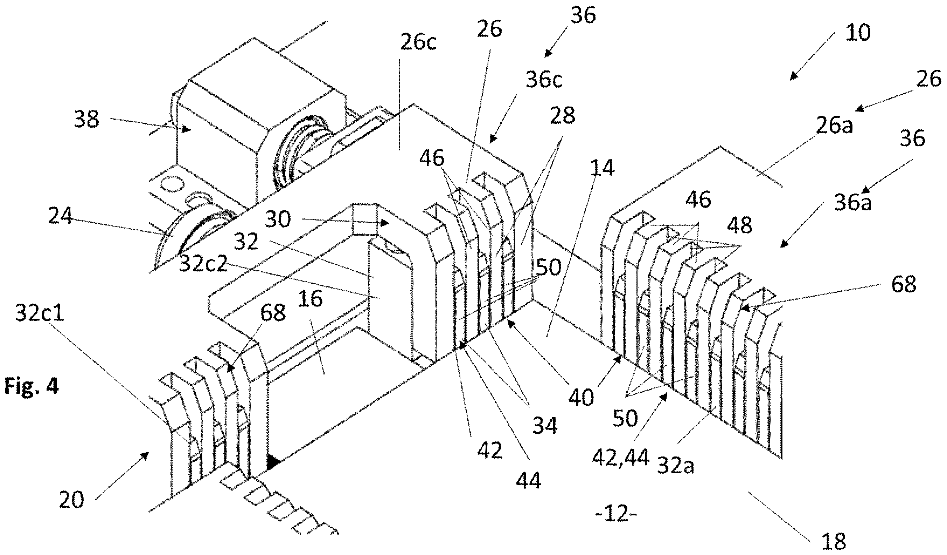

Der Aufbau und die Funktion der Vibrationseinheiten 38, 38a-38d werden nachfolgend anhand von Fig. 4 bis 7 beispielhaft an einer Vibrationseinheit 38, 38c beschrieben.

Zur Ausrichtung der Wiederholkomponente 14, 16 beim Einführen zwischen zwei gegenüberliegend angeordneten Vibrationseinheiten 38c, 38d wird die Rüttelbacke 26, 26c, 26d durch den Vibrationserzeuger 24 in Vibration gebracht. Die Vibrationsschwingungen werden dabei über eine lineare Lagereinheit 66 so gerichtet, dass die Bewegung der Rüttelbacke 26, 26c, 26d in horizontaler Ebene orthogonal zur Kante der Wiederholkomponente 14, 16 erfolgt. Jede Vibrationseinheit 38, 38a-38d ist dadurch über eine oder mehrere lineare Lagereinheit/en 66 fest an die Grundplatte 60 der Stapelvorrichtung 10 angebunden.

Als Vibrationserzeuger 24 eignen sich u.a. Rüttelmotoren oder Körperschallwandler.

Für ein störungsfreies und verschleißfreies Einführen der Wiederholkomponente/n 14, 16 durch Ablegen bzw. Einwerfen sind die Rüttelbacken 26, 26c im oberen Bereich mit einer Einführphase - abgerundete oder abgeschrägte Kante 74 - ausgeführt.

Wie man insbesondere Fig. 1, 2 und 6 entnehmen kann, weist die Vibrationseinheit 38, 38a-38d jeder der Anordnungen 36, 36a-36d bei dem dargestellten Ausführungsbeispiel wenigstens zwei beabstandet zueinander angeordnete Lagerungen 70 zum linearbeweglichen Lagern der zugeordneten Rüttelbacke 26, 26a-26d und wenigstens ein Vorspannelement 72 zum Vorspannen der Rüttelbacke 26, 26a-26d gegen einen ersten Endanschlag 74 auf.

In der so vorgesehenen Ruheposition ist die Rüttelbacke 26, 26a-26d am weitesten zu der Mitte des Aufnahme 18 hin angeordnet. Weiter ist ein einstellbarer zweiter Endanschlag 76 zur Begrenzung der Bewegung der Rüttelbacke 26, 26a-26d vorgesehen.

Somit ist die Rüttelbacke 26, 26a-26d an der Lagerung 70, die das Vorspannelement 72 und wenigstens einen vorzugsweise einstellbaren Anschlag 74, 76 aufweist, zwischen zwei Endpositionen bewegbar gelagert.

Insbesondere ist die Rüttelbacke 26, 26a-26d dazu ausgebildet, zwischen einer durch den ersten Endanschlag 74 begrenzten ersten Endposition, in der die Rüttelbacken-Anlagefläche 28 und die Positionierbacken-Anlagefläche 34 zueinander ausgerichtet sind - d.h. insbesondere bündig zueinander sind - und einer durch den zweiten Endanschlag 76 begrenzten zweiten Endposition, in der die Rüttelbacken-Anlagefläche 28 zumindest bereichsweise weiter entfernt von der Aufnahme 18 für den Zellstapel 12 ist als die Positionierbacken-Anlagefläche 34, zu schwingen.

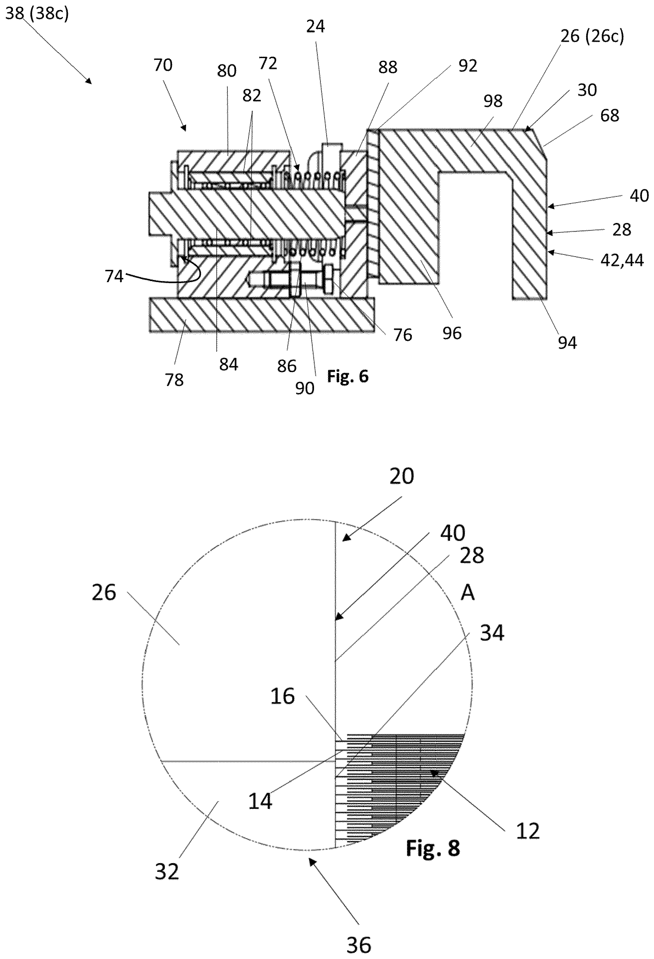

Wie man am besten der Fig. 6 entnehmen kann, weist hierzu die Vibrationseinheit 38, 38c bei der dargestellten konkreten Ausführung eine Basisplatte 78 zur Befestigung auf der Grundplatte 60, je ein Gehäuse 80 für jede der wenigstens zwei Lagerungen 70, je eine in dem Gehäuse 80 aufgenommene Linearführung 82, je eine darin linear geführte Welle 84, an der bei der hier dargestellten Ausführungsform der erste Endanschlag 74, zum Beispiel als integraler Flansch oder Vorsprung oder als gesondertes Element oder dergleichen, ausgebildet ist, je eine Feder 86, zum Beispiel eine um die Welle 84 herum angeordnete Schraubendruckfeder, als Vorspannelement 72, eine Schwingplatte 88, die an den Wellen 84 der beabstandeten Lagerungen 70 und somit schwingend befestigt ist und an der die Rüttelbacke 26, 26c und der Vibrationserzeuger 24 befestigt sind, den an dem jeweiligen Gehäuse 80 zum Beispiel mittels einer Einstellschraube 90 einstellbaren zweiten Endanschlag 76, gegen den die Schwingplatte 88 anschlägt, und eine Abstimmplatte 92 auf, die zum Einstellen der Position der Rüttelbacke 26, 26c an der Schwingplatte 88 und/oder von Eigenfrequenzen aus einem Sortiment unterschiedlicher Abstimmplatten mit unterschiedlichen Dicken und/oder Massen ausgewählt ist.

Die Rüttelbacke 26, 26c ist bei der dargestellten Ausführung im Querschnitt U-förmig ausgebildet mit einem ersten Schenkel 94, an dem die Rüttelbacken-Anlagefläche 28 und die Vorsprung-Rücksprung-Ausbildung 42 ausgebildet ist, und einem zweiten Schenkel 96, der über die Abstimmplatte 92 und die Schwingplatte 88 an die Welle 84 und damit an die Lagerung 70 angeschlossen ist und an dem wenigstens einer der Vibrationserzeuger 24 angeschlossen ist, und einem Steg 98, der einen Körper 100 der zugeordneten Positionierbacke 32, 32c1, 32c2 übergreift. Am oberen Eckbereich zwischen dem ersten Schenkel 94 und dem Steg 98 ist die Rüttelbacke 26, 26c mit der abgerundeten oder abgeschrägten Kante 68 zum Bilden der Einführphase für die Wiederholkomponente 14, 16 versehen.

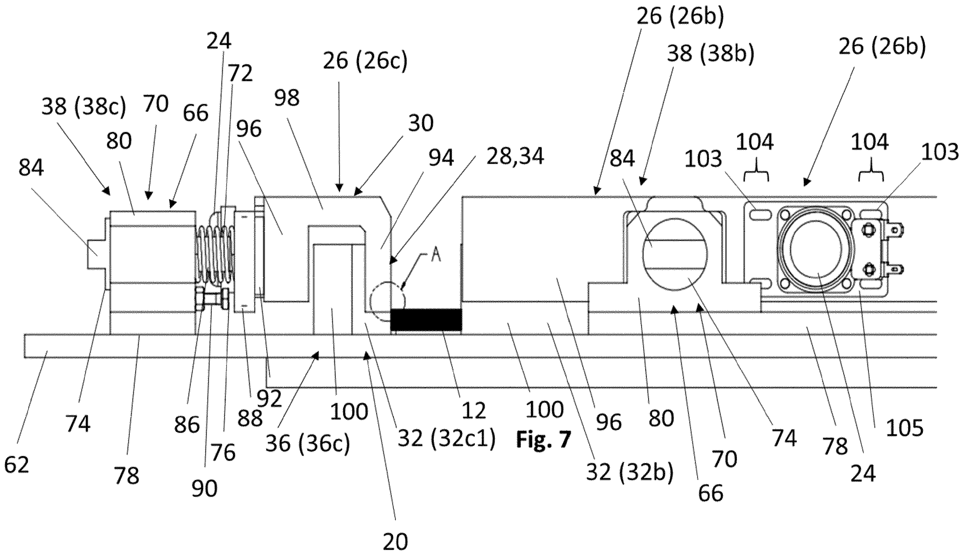

An dem zweiten Schenkel 94 sind unterschiedliche Verbindungsstellen 104 zur wahlweisen Anordnung des wenigstens einen Vibrationserzeugers 24 oder mehrerer Vibrationserzeuger 24 vorgesehen, so dass auch hierdurch Eigenfrequenzen einstellbar sind. In Fig. 7 ist die Einstellung der Verbindungsstelle 104 durch Langlöcher 103 an einer Befestigungsplatte 105 der Vibrationserzeuger 24 angedeutet. Bei den längeren Vibrationseinheiten 38a, 38b an den längeren Seiten a, b sind in der hier beispielhaft dargestellten Einstellung je zwei Vibrationserzeuger 24 vorgesehen, während in der hier dargestellten Einstellung an den kürzeren Vibrationseinheiten 38c, 38d je ein Vibrationserzeuger 24 vorgesehen ist.

Gemäß Fig. 1 und 6 weist die Vibrationseinheit 38, 3a-38d somit jeweils eine oder mehrere der linearen Lagereinheit/en 66 auf, welche auf der Basisplatte 78 angeordnet ist/sind. Eine lineare Lagereinheit 66 umfasst das Gehäuse 80, in welchem die Welle 84 über die Linearführung 82 gelagert ist. Diese Welle 80 ist dabei geometrisch so ausgeführt, dass sie in ihrer Bewegung in horizontaler Ebene zum Zellstapel 12 hin, folgend nach vorne genannt, begrenzt ist. Diese axiale Sicherung der Welle 84 nach vorne kann über einen Absatz oder eine zusätzliche Komponente, bspw. einen Wellensicherungsring, gewährleistet werden. Über das Vorspannelement 72, wie z.B. die Feder 86, wird sichergestellt, dass die Welle 84 in horizontaler Ebene nach vorne gegen diesen ersten Endanschlag 74 gedrückt wird. Diese Feder 86 wiederum hat die Funktion, eine Bewegung der Schwingplatte 88 in horizontaler Ebene nach vorne, in Richtung zum Zellstapel 12, bzw. nach hinten, vom Zellstapel 12 weg, zu ermöglichen. Diese Bewegung wird auch von der Rüttelbacke 26, 26a-26d vollzogen, welche über die Abstimmplatte 92 an die Schwingplatte 88 angebunden ist. Durch den zweiten Endanschlag 76 kann die Bewegung nach hinten (vom Zellstapel 12 weg) begrenzt und eingestellt werden.

Die Bewegung wird hierbei durch den Vibrationserzeuger 24 erzeugt, wie vorlaufend beschrieben.

Durch Anordnung einzelner oder mehrerer Vibrationserzeuger 24 an einer Rüttelbacke 26, 26a-26d, bspw. über die lange Seite a, b der Wiederholkomponente/n 14, 16, bzw. über Anbindung des Vibrationserzeuger 24 an verschiedenen Positionen an der Rüttelbacke 26, 26a-26d kann die Eigenfrequenz der Rüttelbacke 26, 26a-26d und damit gleichbedeutend das Dynamikverhalten der Komponenten angepasst werden, welche verantwortlich für die Korrektur der Position der Wiederholkomponente/n 14, 16 in horizontaler Ebene ist und damit für die Positionsgenauigkeit des Zellstacks.

Wie in Fig. 1 angedeutet, ist weiter ist eine Steuerung 102 vorgesehen, mittels der die einzelnen Vibrationserzeuger 24 jeder Anordnung 36, 36a-36d einzeln, auch unterschiedlich, ansteuerbar sind.

Insbesondere bei Anwendung von einem/mehreren Körperschallwandler/n als Vibrationserzeuger 24 kann die Frequenz einer/mehreren Rüttelbacke/n 26, 26a-26d somit flexibel angepasst werden, dies ist insbesondere bei Formatwechsel der Wiederholkomponente/n 14, 16 von besonderem Vorteil. Sogar ein inaktiver Betrieb einer oder mehrerer Vibrationseinheit/en 38, 38a-38d ist möglich, so dass eine/mehrere Rüttelbacke/n 26, 26a-26d lediglich als Einführhilfe verwendet wird/werden. Hierzu wird/werden die Rüttelbacke/n 26, 26a-26d durch das Vorspannelement 72, wie z.B. die Feder 86 in vorderer Position arretiert.

Ein weiterer Vorteil der voneinander unabhängigen Anordnung und Ansteuerung der einzelnen Rüttelbacken 26, 26a-26d ist, dass die zueinander gegenüberliegenden Rüttelbacken 26a und 26b bzw. 26c und 26d gleichläufig, gegenläufig, oder auch versetzt betrieben werden können (siehe Fig. 4). Hierdurch kann nochmals Einfluss auf die geforderte Stapel- und Positionsgenauigkeit genommen werden.

In den Fig. 7 und 8 ist dargestellt, dass die Lagekorrektur einer/mehrerer Rüttelbacke/n 26, 26c nur für eine geringe Anzahl von Wiederholkomponenten 14, 16, im oberen Bereich des Zellstapels 12, erfolgt. Eine aktive Lagekorrektur einer größeren Anzahl von Wiederholkomponenten 14, 16 bzw. aller Wiederholkomponenten 14, 16 wäre nicht zielführend, da die Haftreibung zwischen den einzelnen Lagen bei einem größeren Zellstapel 12 zu groß für eine Lagekorrektur wäre.

Wie man insbesondere Fig. 3 bis 5 und den Fig. 9a-9d entnehmen kann, ist die Positionierbacke 32, 32a-32d2 mit dem Körper 72 blockförmig oder leistenförmig ausgebildet. Vorzugsweise ist die Positionierbacke 32, 32a-32d2 an einem oberen Endbereich oberhalb der Positionierbacken-Anlagefläche 34 zum Bilden der Einführschräge 64 abgeschrägt oder abgerundet. Weiter ist die Positionierbacke 32, 32a-32d2 derart ausgebildet, dass an einer der Aufnahme 18 zur Aufnahme des Zellstapels 12 zugewandten Seitenfläche - der Positionierbacken-Anlagefläche 34 - die Vorsprung-Rücksprungausbildung 42 ausgebildet ist.

Um die Übergabe der Wiederholkomponente/n 14, 16 von der Vibrationseinheit 38, 38a-38d, insbesondere deren Rüttelbacke 26, 26a-26d an eine/mehrere Positionierbacke/n 32, 32a-32d2 unter der Prämisse zu ermöglichen, die Positionsgenauigkeit der Wiederholkomponente/n 14, 16 nicht zu verlieren, werden die Rüttelbacke/n 26, 26a-26d und die Positionierbacke/n 32, 32a-32d2 geometrisch überlappend ausgeführt.

Die Rüttelbacke 26, 26a-26d kann dabei geometrisch so ausgeführt werden, dass die Ausrichtung der Wiederholkomponente/n 14, 16 nur in einem oder mehreren Teilbereichen erfolgt.

Hierzu sind die Rüttelbacke 26 und die zugeordnete Positionierbacke 32 mit den komplementären Vorsprungs-Rücksprungsausbildungen 42 versehen.

Wie oben bereits erwähnt und insbesondere in den Fig. 1 bis 5 gezeigt ist die Vorsprungs-Rücksprungsausbildung 42 bei der Positionierbacke 32, 32a-32d2 und der Rüttelbacke 26, 26a-26d der ersten Ausführungsform jeweils als Kammstruktur 44 mit zwischen Zähnen 46, 50 ausgebildeten Nuten 48, 52 ausgebildet. Dabei greifen Rüttelbacken-Zähne 46 in Positionierbacken-Nuten 52 ein, und Positionierbacken-Zähne 50 greifen in Rüttelbacken-Nuten 48 ein. Die Kammstruktur 44 erstreckt sich hier über die gesamte Breite der Anlagenflächen 28, 34.

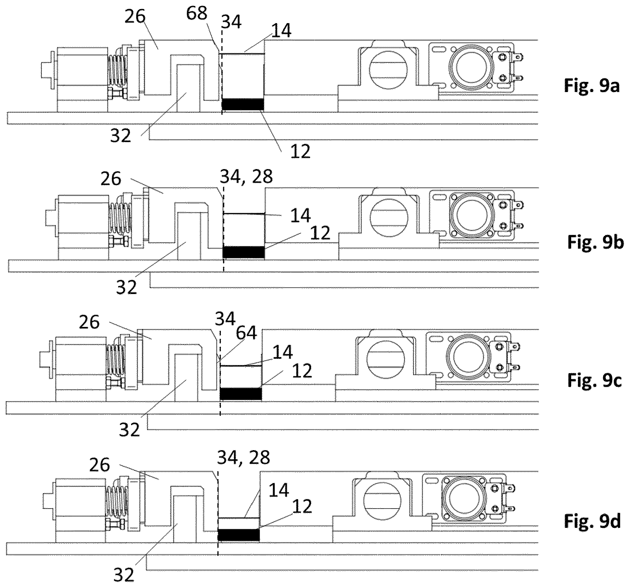

Zum besseren Verständnis ist in Fig. 9a bis 9d eine Bildfolge dargestellt, die dem Ablegen bzw. Einwerfen einer Wiederholkomponente 14 entspricht, von der ersten groben Ausrichtung einer Wiederholkomponente 14 in der horizontalen Ebene durch die Einführphase - an der abgeschrägten Kante 68 - einer Rüttelbacke 26, 26c in hinterer Position (siehe Fig. 9a), über die feine Lagekorrektur durch den Hub der Rüttelbacke 26, 26c in die vordere Position (siehe Fig. 9b), bis hin zur Aufnahme einer Wiederholkomponente/n 14 von einer/mehreren Positionierbacke/n 32, 32c1, 32c2 durch die weitere Absenkbewegung einer/mehrerer Wiederholkomponente/n 14 (siehe Fig. 9c und 9d).

Im Folgenden wird anhand der Fig. 10 bis 19 der Aufbau und die Funktion der Stapelvorrichtung 10 gemäß dem zweiten Ausführungsbeispiel näher erläutert. Insbesondere wird dabei auf die Unterschiede zu dem ersten Ausführungsbeispiel eingegangen. Gleiche oder entsprechende Teile sind hier mit gleichen Bezugszeichen versehen. Insbesondere weist die Stapelvorrichtung 10 ebenfalls die um die Aufnahme 18 herum angeordnete Positioniervorrichtung 20 mit den Anordnungen 36, 36a1, 36a2, 36b1, 36b2, 36c, 36d auf, die aus mittels Vibrationserzeugern 24 einzeln angesteuert in Schwingung versetzbaren Rüttelbacken 26, 26a1, 26a2, 26b1, 26b2, 26c, 26d und im Betrieb stationären Positionsbacken 32, 32a1, 32a2, 32b1, 32b2, 32c, 32d gebildet sind. Die Vibrationseinheiten 38, 38a1, 38a2, 38b1, 38b2, 38c, 38d, an denen die Rüttelbacken 26, 26a1, 26a2, 26b1, 26b2, 26c, 26d ausgebildet sind, sind hier konstruktiv anders aufgebaut, so dass sich die Rüttelbacken 26, 26a1, 26a2, 26b1, 26b2, 26c, 26d entlang der Bogenbahn 56, hier ausgebildet als Kreisbahn, schwingend bewegen.

Weiter ist bei dem zweiten Ausführungsbeispiel die Aufnahme 18 mit einer beweglichen seitlichen Führung 106 versehen, wie dies im Einzelnen in der Literaturstellen [3] und [4] beschrieben und gezeigt ist. Es wird für weitere Einzelheiten zum Aufbau der Aufnahme 18 auf diese Literaturstellen [3] und [4] verwiesen.

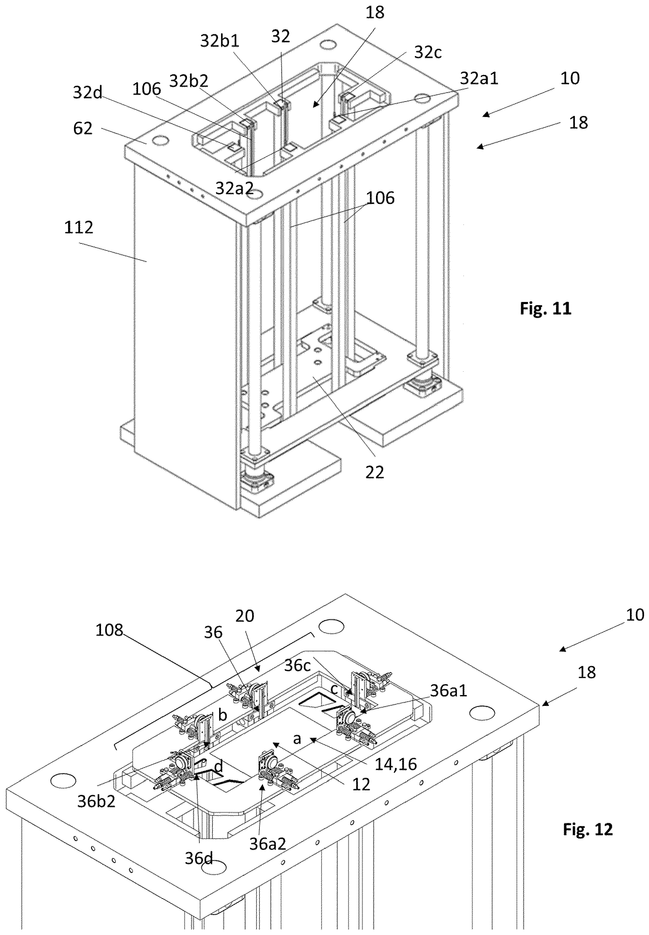

Fig. 10 zeigt den oberen Teil der Stapelvorrichtung 10 gemäß dem zweiten Ausführungsbeispiel - aufgrund der hier rotatorischer Schwingbewegung der Rüttelbacken 26, 26a1, 26a2, 26b1, 26b2, 26c, 26d auch rotatorische Variante genannt. Fig. 11 zeigt den unteren Teil der Stapelvorrichtung 10.

Der obere Teil ist als Vibrationseinrichtung 108 ausgebildet. Die Vibrationseinrichtung 108 weist die Grundplatte 62 auf, welche über eine nicht detailliert dargestellte Hubeinheit 110 an einem Grundgestell 112 der Stapelvorrichtung 10 angebunden ist. Auf der Grundplatte 62 sind die Vibrationseinheiten 38, 38a1, 38a2, 38b1, 38b2, 38c, 38d montiert und können auf die spezifischen Merkmale der zu verarbeitenden Wiederholkomponenten 14, 16 ausgerichtet werden.

Die in Fig. 10 dargestellte Vibrationseinrichtung 108 befindet sich direkt oberhalb der in Fig. 11 dargestellten Aufnahme 18, welche die ausgerichteten Wiederholkomponenten 14, 16 im fortschreitenden Stapelprozess aufnimmt und positionsgetreu lagert. Die Aufnahme 18 weist das Grundgestell 112 mit den Führungen 106 auf.

Die Kombination aus Vibrationseinrichtung 108 und Aufnahme 18 ist in Fig. 12 dargestellt.

Aufgrund der mechanischen Eigenschaften der Wiederholkomponenten 14, 16 kann nur eine sehr geringe Anzahl an übereinander liegenden Komponenten beschädigungsfrei ausgerichtet werden. Diese Anzahl an Wiederholkomponenten, welche sich innerhalb der Vibrationseinrichtung 108 befinden und somit durch die Vibration aktiv ausgerichtet werden, kann durch die Hubachse (Z-Achse) des Höhenausgleichs eingestellt werden. Hierzu taktet die Z-Achse mit ihren Aktoren nach dem Ablegen bzw. Einwerfen einer Wiederholkomponente um die entsprechende Materialdicke nach unten, um zudem gleichzeitig die Ablageposition der Wiederholkomponenten während des Stapelprozesses konstant zu halten. Durch die Aktoren der Z-Achse wird die Stützeinrichtung 22, auf der die Wiederholkomponenten 14, 16 abgelegt werden, in dem Grundgestell 112 in Höhenrichtung bewegt.

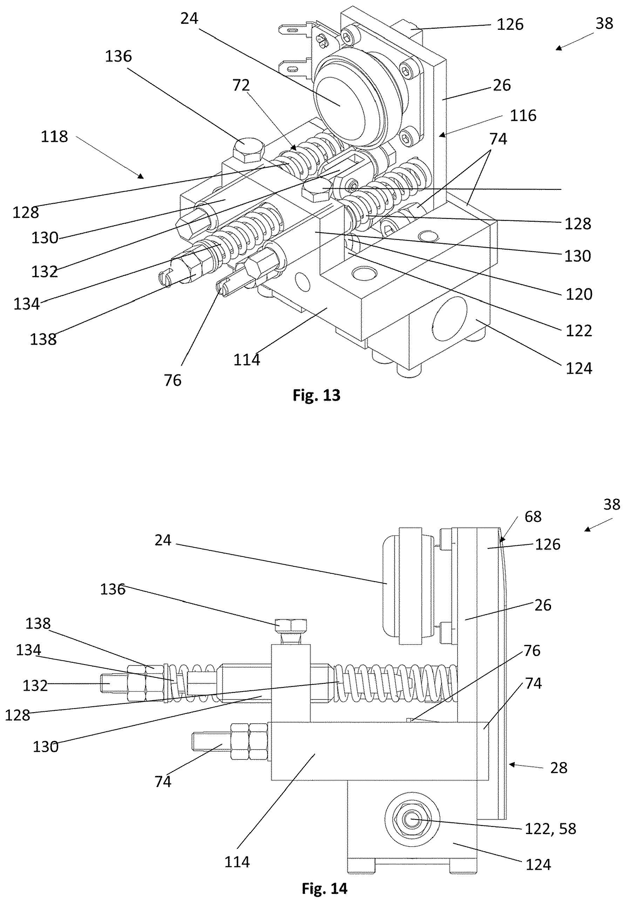

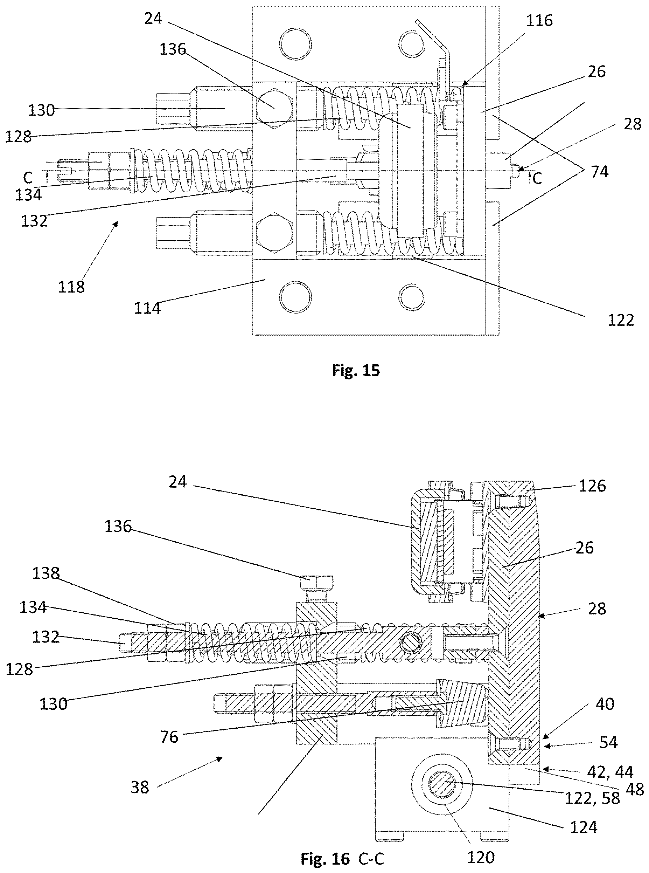

Nachfolgend wird anhand der Fig. 13 bis 16 der Aufbau der gleich aufgebauten Vibrationseinheiten 38, 38a1, 38a2, 38b1, 38b2, 38c, 38d am Beispiel einer der Vibrationseinheiten 38, 38c näher erläutert. Dabei zeigt Fig. 13 eine perspektivische Ansicht der Vibrationseinheit 38, 38c, Fig. 14 eine Seitenansicht, Fig. 15 eine Draufsicht und Fig. 16 einen Schnitt durch die Vibrationseinheit 38, 38c entlang der Linie C-C von Fig. 15.

Die Vibrationseinheit 38, 38c umfasst eine Basiseinheit 114, eine Schwingereinheit 116 und eine Justage-Einheit 118.

Die Schwingereinheit 116 umfasst als eigentlichen Schwinger die Rüttelbacke 26, 26c, welche über die Lagerung 70 an die Basiseinheit 114 drehbar angebunden ist. Die Lagerung 70 umfasst hier konventionelle Wälzlager 120, eine Befestigungswelle 122 und Lagerböcke 124.

An der Rüttelbacke 26, 26c ist, auf der vom Zellstapel 12 abgewandten Seite, der Vibrationserzeuger 24 montiert. Auf der dem Zellstapel 12 zugewandten Seite weist die Rüttelbacke 26, 26c eine Alignment-Leiste 126 auf, an der die Rüttelbacken-Anlagefläche 28 ausgebildet ist.

Die Rüttelbacke 26, 26c bzw. deren dynamisches Verhalten lässt sich durch die Justage-Einheit 118 auf den jeweiligen Anwendungsfall einstellen.

Die Justage-Einheit 118 weist wenigstens ein Vorspannelement 72, hier ausgebildet als erste Druckfeder 128 und wenigstens eine einstellbare Vorspanneinheit 130 zum Einstellen der Vorspannkraft des Vorspannelements 72 auf. Bei dem konkreten Ausführungsbeispiel sind mehrere, z.B. zwei, erste Druckfedern 128, mit einer entsprechenden Anzahl von Vorspanneinheiten 130 vorgesehen.

Weiter weist die Justage-Einheit 118 eine einstellbare Koppeleinheit 132 auf zum Koppeln an die Rüttelbacke 26, 26c mit einstellbarer Relativposition. Bei der dargestellten Ausgestaltung ist die Koppeleinheit 132 gelenkig an die Rüttelbacke 26, 26c angekoppelt.

Die Justage-Einheit 118 weist weiter ein weiteres Vorspannelement zum Wirken in der Gegenrichtung wie das erste Vorspannelement 72 auf. Das weitere Vorspannelement ist hier ausgebildet als zweite Druckfeder 134.

Die Justage-Einheit 118 weist wenigstens ein Feststellelement wie z.B. eine Sicherungsschraube 136 oder eine Kontermutter z138 um Sichern der Einstellung der wenigstens einen Vorspanneinheit 130 und/oder der einstellbaren Koppeleinheit 132 auf.

Weiter weist die Justage-Einheit 118 die einstellbaren mechanischen Endanschläge 74, 76 auf.

Zum Einstellen des dynamischen Verhaltens wird die Rüttelbacke 26, 26c über die beiden ersten Druckfedern 128 mit Hilfe der Vorspanneinheiten 130 gegen die zweite, mit der einstellbaren Koppeleinheit 132 an der Rüttelbacke 26, 26c befestigten Druckfeder 134 entsprechend den erforderlichen dynamischen Kennwerten für eine bestmöglichen Ausrichtung der Wiederholkomponenten 14, 16 vorgespannt.

Die Vorspanneinheiten 130 werden mit Hilfe der Sicherungsschrauben 136 gegen ungewolltes Verdrehen gesichert. Dies stellt eine konstante Vorspannkraft der ersten Druckfedern 128 sicher. Ähnliches gilt für die Sicherung der Koppeleinheit 132 durch Kontermuttern 138. Dies stellt eine konstante Vorspannkraft der zweiten Druckfeder 134 sicher.

Durch den Austausch der beispielsweise als Druckfedern 134, 128 ausgebildeten Vorspannelemente kann die Steifigkeit des Schwingungssystems grundlegend geändert werden.

Sämtliche Justage-Elemente 128, 130, 132, 134, 136, 138, welche der Regulierung bzw. Anpassung des dynamischen Verhaltens der als Schwinger wirkenden Rüttelbacke 26, 26c dienen, sind an der Basiseinheit 114 angebunden und gesichert.

Der vordere sowie hintere mechanische Endanschlag 74, 76 zur Begrenzung der Schwingungsamplitude sind ebenfalls an der Basiseinheit 114 angebunden.

Der Kontakt zwischen der Vibrationseinheit 38, 38c und den auszurichtenden Wiederholkomponenten 14, 16 findet ausschließlich durch die wechselbare Alignmentleiste 126 statt. Diese Alignmentleiste 126 kann somit auf die erforderliche Alignment-Geometrie angepasst und hinsichtlich der geforderten mechanischen Eigenschaften abgestimmt werden.

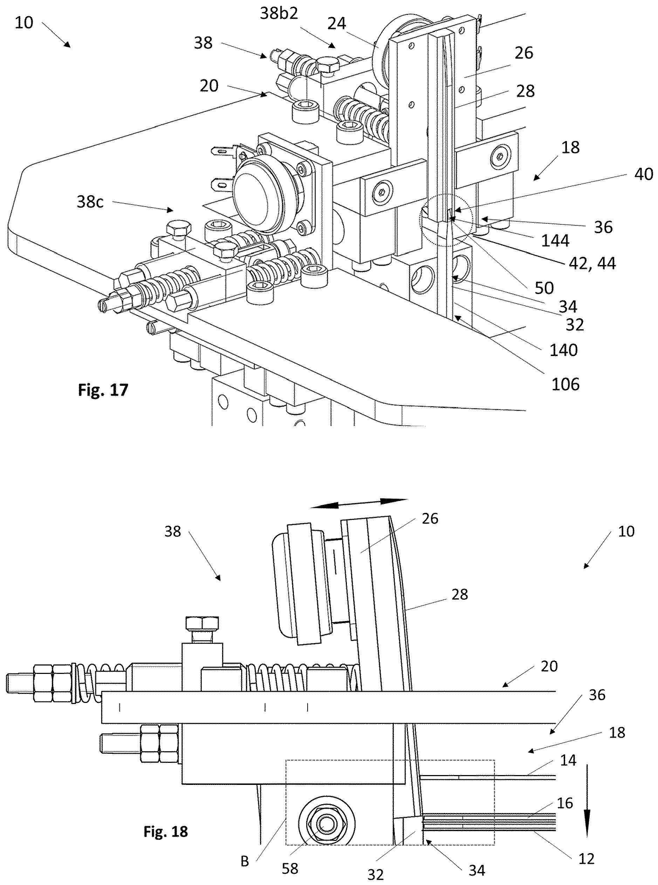

Im Folgenden werden der Aufbau und die Funktion der Positionsvorrichtung 20 mit dem Zusammenspiel der Rüttelbacke 26 und der Positionsbacke 32 unter Bezugnahme auf Fig. 17 bis 19 näher erläutert.

Fig. 17 zeigt eine perspektivische Ansicht der aus einer Vibrationseinheit 38, 38b1 mit der Rüttelbacke 26, 26b1 und einer darunter angeordneten Positionsbacke 32, 32b1 gebildeten Anordnung 36, 36b1 zur Erläuterung des Aufbaus der Positioniervorrichtung 10 und zur Erläuterung der hierzu vorgesehenen Form der Rüttelbacke 26, 26b1, speziell deren hier an der Alignmentleiste 126 ausgebildeten Rüttelbacken-Anlagefläche 28.

Die Positionsbacken 32, 32a1-32d der Positionsvorrichtung 10 der zweiten Ausführungsform sind leistenartig ausgebildet und bilden das obere Ende von Führungsschienen der Führungen 106.

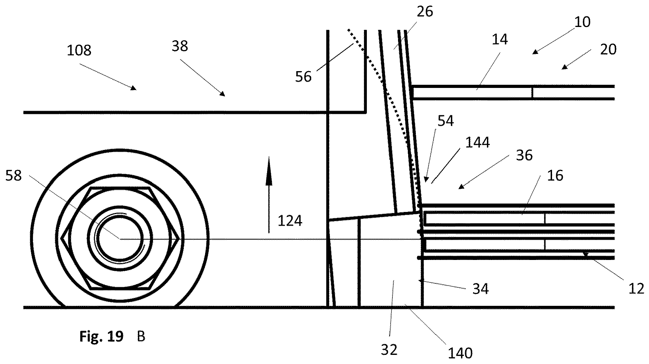

Da der Übergang zwischen der aktiven Vibrationseinheit 38, 38b1 mit der vibrierenden Rüttelbacke 26, 26b1 und der starren Aufnahme 18 mit der starren Positionsbacke 32, 32a1 ohne Versatz erfolgen sollte, um ein Einklemmen der Wiederholkomponenten 14, 16 zu vermeiden, sind die Positionierbacken-Anlageflächen 34 der Positionsbacken 32, 32a1-32d der Aufnahme 18 mit einer Bogenform versehen, die exakt der Bogenbahn 56 der Rüttelbacken 26, 26a1-26d entspricht. Bei der dargestellten Ausführung, bei der sich die Rüttelbacken 26, 26a1-26d um die durch die in den Wälzlagern 120 drehende Befestigungswelle definierte Achse 58 drehen, sind die Positionierbacken-Anlageflächen 34 mit einer Verrundung versehen, die exakt dem Schwenkradius 142 der Schwingereinheit 116 entspricht - siehe Fig. 19.

Zudem sind an den Anlagenflächen 28, 34 die komplementären Vorsprungs-Rücksprungsausbildungen 42 vorgesehen. Bei der dargestellten Ausführung ist eine Kammstruktur 44 mit nur einem Zahn 50 an der einen Backe, hier an der Positionierbacke 32, 32b1, der in eine Nut 48 an der anderen Backe, hier an der Rüttelbacke 26, 26b1 vorgesehen.

Hierdurch greifen die Alignmentleiste 126 und das Alignment, d.h. die Positionierbacke 32, 32b1 der Aufnahme 18 "kammförmig" ineinander, um ebenfalls ein Verkanten/Einhaken zu verhindern (siehe Fig. 17).

Nachfolgend werden anhand der Darstellung der Fig. 18 und 19 kurz ein Ausrichtvorgang mit Hilfe der Vibrationseinheiten 36, 36a1-36d in der Vibrationseinrichtung 108 beschrieben sowie einiger Vorteile davon erläutert.

Einleitend ist zu erwähnen, dass durch die vorgelagerten Prozesse hinsichtlich der Materialzuführung/Zuführung der Wiederholkomponenten (beschrieben in der Literaturstelle [3] auf die für weitere Einzelheiten verwiesen wird) bei beiden Wiederholkomponenten 14, 16 ein Freifall, bevor diese in der Stapelposition auf den Höhenausgleich auftreffen, vorliegt. Aufgrund dieses undefinierten Ablageprozess sollten die Wiederholkomponenten nun bis zum Erreichen der geforderten Positionstoleranzen ausgerichtet werden. Wegen der wechselnden mechanischen Eigenschaften der Wiederholkomponenten 14, 16 wird hier eine Unterstützung dieses Ausrichtvorgangs durch Vibration vorgeschlagen.

Der Ausgangspunkt der Funktionsbetrachtung bildet eine Wiederholkomponente 14, welche sich entweder durch einen waagerechten Wurf oder einen lotrechten Freifall mit einer Anfangsgeschwindigkeit in einer Abwärtsbewegung befindet.

Diese Wiederholkomponente 14 trifft dann während des Einwerfens auf der Alignmentleiste 126 einer Vibrationseinheit 36, 36c auf und erfährt durch die Schwenkbewegung der Rüttelbacke 26, 26c eine Ausrichtung zum Zentrum der Aufnahme 18 der Stapelvorrichtung 10 hin. Bereits auch ohne eine aktive Vibration wäre eine Ausrichtung der Wiederholkomponenten 14, aufgrund des trichterförmigen Aufbaus der Schwingereinheit 116 gegeben (siehe Fig. 18 - dies ist ein Vorteil der rotatorischen Variante). Besonders die mittels waagerechten Wurfs eingebrachte Wiederholkomponente wird durch die Alignmentleiste 126 abgebremst, wodurch der horizontale Anteil der Bewegung stark reduziert wird und ein Abprall-Effekt entsteht.

Durch den immer weiter abnehmenden Bewegungsraum der Wiederholkomponenten 14 in der Vibrationseinrichtung 108 während des Ablagevorgangs erhöht sich der Einfluss der Vibration/Elongation auf die resultierende Hüllkurve bzw. die Positionstoleranzen der Wiederholkomponenten 14. Unmittelbar vor dem Auftreffen der Wiederholkomponente 14 auf der darunter liegenden Schicht ist der Effekt maximal und ermöglicht es so auch ggf. bereits leicht anhaftende und nicht ausreichend präzise positionierte Wiederholkomponenten 14 nochmals von der darunter liegenden Schicht zu lösen und positionsgenau innerhalb der geforderten Toleranzen abzulegen.

Am Übergang der lotrecht stehenden Alignmentleiste 126 zum durch die Positionierbacke 32, 32c gebildeten starren Alignment der Aufnahme 18 entspricht der vorhandene Bewegungsraum der Wiederholkomponente 14 der zulässigen Hüllkurve des Gesamtstacks. Befindet sich die Wiederholkomponente ab diesen Zeitpunkt innerhalb der Alignments - Führung 106 - der Aufnahme 18 der Stapelvorrichtung 10 und weist diese keinerlei Beschädigungen in welcher Form auch immer auf, so gilt sie als ausgerichtet.

In Fig. 19 ist der hinsichtlich der Bogenbahn 56 tangentiale Übergang der Rüttelbacken-Anlagefläche 28 zu der Positionierbacken-Anlagefläche 34 bei dem Bezugszeichen 144 angedeutet.

Vorteil des rotatorischen Ansatzes ist, dass die Schwingungsamplitude während des fortschreitenden Ablageprozesses (Wiederholkomponente 14 nähert sich der Ablageposition an) automatisch abnimmt. Somit kann im oberen Bereich der Vibrationseinrichtung 108 eine größere Positionstoleranz abgedeckt werden, die dann während des Freifalls der Wiederholkomponente 14 bis zum Erreichen der definierten Hüllkurve der Aufnahme 18 der Stapelvorrichtung 10 immer weiter verringert wird.

Zudem kann durch die bereits oben erwähnte, an den Schwenkradius 142 der Rüttelbacke 26, 26a1-26d angepasste Geometrie der starren Positionierbacken 32, 32a1-32d der Positioniervorrichtung 20 ein Verkanten/Einklemmen der Wiederholkomponenten 14, 16 im Übergangsbereich zwischen der Aufnahme 18 und der Vibrationseinrichtung 108 verhindert werden. Es findet immer ein "tangentialer" Übergang zwischen Alignmentleiste 126 und Alignment der Aufnahme statt (siehe Fig. 19)

Die Ausrichthöhe, mit anderen Worten die Führungslänge, an der eine Komponentenausrichtung durch Vibration erfolgt, kann durch eine Anpassung der Rüttelbacke 26, 26a1-26d und eine entsprechende Modifikation der Alignmentleiste 126 adaptiert werden.

Das System kann ohne Austausch von Komponenten auch passiv, als starres System in Form eines konventionellen Einwurftrichters verwendet werden. Dabei wird die Rüttelbacke 26, 26a1-26d lediglich durch die Vorspannelemente 72 - erste Druckfedern 128 in Kombination mit den Vorspanneinheiten 130 gegen den vorderen mechanischen Endanschlag 74 gedrückt. Analog kann dieses Verblocken auch durch den hinteren mechanischen Endanschlag 76 übernommen werden.

Sollte die Aufprallenergie der mittels waagerechtem Wurf eingebrachten Komponente den zulässigen Wert für den Alignmentbereich überschreiten, so kann die Schwingereinheit 116 durch entsprechende Auswahl an Druckfedern 128, 134 oder anderen Vorspannelementen auch zum Dämpfersystem umfunktioniert werden, um somit die kinetische Energie der Wiederholkomponente 14 zu absorbieren und eine Beschädigung zu verhindern.

Durch den Aufbau der Vibrationseinrichtung 108 aus einzelnen, voneinander unabhängigen Vibrationseinheiten 38, 38a1-38d ergibt sich zudem die Möglichkeit, spezifische Frequenzen und Amplituden zu erzeugen, wodurch flexibel auf Werkstückanforderungen reagiert werden kann.

Das Ansteuern der Vibrationserzeuger 24 kann so erfolgen, wie dies oben für das erste Ausführungsbeispiel beschrieben worden ist.

Kombinationen der verschiedenen Merkmale der hier beschriebenen Ausführungsbeispiel sind natürlich möglich.

Bevorzugte Ausführungsformen der Erfindung betreffen ein System für die Aufnahme, Positionierung und Fixierung aller für den Aufbau bzw. der Herstellung von Batteriezellen, wie z.B. Lithium-Ionen-Batteriezellen, oder Brennstoffzellen-Stacks, wie z.B. PEMFC-Stacks, erforderlichen Komponenten, im Hinblick auf eine Fertigung in einer Großserienanlage. Positioniervorrichtungen 20, Stapelvorrichtungen 10 und Stapelverfahren gemäß Ausführungsformen der Erfindung werden bei folgenden Gesamtprozessen I und II zur Herstellung von Batteriezellen oder von Brennstoffzellen verwendet:

### I. Beschreibung des Gesamtprozesses (Batteriezelle):

Der Produktionsprozess einer Lithium-Ionen-Batteriezelle umfasst die vier Hauptprozessschritte Elektrodenfertigung, Zellassemblierung sowie Zellformierung und Aging.

Unabhängig von verschiedenen Zelltypen (zylindrische Zelle, prismatische Zelle oder Pouchzelle) besteht die kleinste Einheit jeder Lithium-Ionen-Zelle aus zwei Elektroden, Anode A (z.B. Kupfer Graphit beschichtet) und Kathode K (z.B. ALU NMC-111 beschichtet), und einem Separator S, der die Elektroden voneinander trennt. Bei bevorzugten Prozessen ist die Kathode K dabei umlaufend ca. 1 mm kleiner als die Anode A. Der Separator S ist das größte Teil einer Zelle und ist umlaufend ca. 1 mm größer als die Anode A.

Zur Fertigung einer Zelle wird ein Stapelvorgang durchgeführt, bei dem die einzelnen Elektroden A, K inklusive Separator S in mehreren Schichten übereinander gestapelt werden, bis eine gewünschte Zellkapazität erreicht ist. Bei diesem Prozessschritt wird eine exakte Positionierung der Elektroden gefordert, um eine hohe elektrische Leitfähigkeit und somit eine hohe Leistungsdichte gewährleisten zu können. Um die genaue Position der einzelnen Lagen halten zu können, werden diese Komponenten in verschiedenen Reihenfolgen SASK oder SKSA miteinander verklebt bzw. laminiert. Diese Einheit, bestehend aus vier Lagen, stellt eine Monozelle dar.

Die Elektroden A, K und der Separator S sind Beispiele für Wiederholkomponenten eines Zellstapels einer Batteriezelle. Bei anderen Arten von Batteriezellen können auch noch andere Wiederholkomponenten vorhanden sein.

Um nun einen kompletten Zellstapel aus vielen einzelnen Schichten oder auch laminierten bzw. geklebten Zellstapeln herzustellen, wird/werden die Wiederholkomponente/n Monozelle/n übereinander positioniert/gestapelt. Dazu wird/werden die Wiederholkomponente/n in der Regel automatisch über ein Handling auf eine Position gesetzt und ggf. mittels einer Bildverarbeitung überprüft. Oftmals werden für das Handling der Wiederholkomponente/n Monozelle Anwendungen mit Vakuumgreifer bzw. -technik verwendet sowie Werkstückträger mit integrierten Niederhaltern, die die Wiederholkomponente/n Monozelle nach dem Auflegen in der Position fixieren.

### II. Beschreibung des Gesamtprozesses (Brennstoffzelle):

Einige Ausführungsformen der Erfindung betreffen eine Stapelvorrichtung 10 zur Herstellung eines Zellaufbaus von Brennstoffzellen, wie zum Beispiel eines PEMFC-Stacks. Bei einer Stapelvorrichtung 10 für den Herstellungsprozess des PEMFC-Stacks handelt es sich um eine Stapelvorrichtung 10, welche abwechselnd eingebrachte Wiederholkomponenten BPP und MEA aufnimmt, ausrichtet und für die weiteren Folgeprozesse ortsfest, innerhalb der vorgegebenen Positionstoleranz führt. Einige weitere Einzelheiten zu bevorzugten Ausgestaltungen der Stapelvorrichtung sind bereits in den nicht vorveröffentlichten [3] und [4] beschrieben und gezeigt, die hiermit durch Bezugnahme inkorporiert werden.

Bei bevorzugten Ausgestaltungen sollen für den Aufbau des Stacks abwechselnd MEA-Komponenten seitlich und BPP-Komponenten lotrecht von oben durch ein Zuführsystem in die Stapelvorrichtung 10 eingebracht werden. Eine Ausrichtung, vor allem der MEA-Komponenten durch die seitliche Einbringung und die damit verbundene Änderung der Bewegungsrichtung von horizontal zu vertikal, erfolgt vorzugsweise durch ein Führungssystem der Stapelvorrichtung. Durch die ausschließlich vertikale Ablagebewegung der BPP ist im Vergleich zur MEA nur ein sehr geringer Aufwand zur Ausrichtung/Positionierung erforderlich. Die Gesamttaktzeit für die Ablage einer Einzelzelle, bestehend aus BPP und MEA kann durch den Aufbau der einzelnen Systeme somit anteilig auf die jeweilige Komponente verteilt werden. Je nach Bedarf ist es dadurch möglich, beispielsweise der Ablage der MEA anteilig mehr Taktzeit zuzuordnen, wenn dieser Prozess mehr Zeit erfordert. Zudem kann der Ablageprozess, wenn erforderlich, optional durch Vibration, im Ablagebereich unterstützt werden, wodurch das Ausrichten der zuletzt abgelegten Komponenten vereinfacht wird.

Es sind somit Vorrichtungen und Verfahren beschrieben worden, die bei einer Großserienherstellung von Batteriezellen oder Brennstoffzellen beim Bilden von Zellstapeln (12) verwendet werden sollen. Zur Verbesserung der Prozesssicherheit bei hohen Prozessgeschwindigkeiten und geringen Toleranzen wurde eine Positioniervorrichtung (20) zum Positionieren der Wiederholkomponenten (14, 16) des Zellstapels (12) vorgeschlagen. Die Positioniervorrichtung (20) weist wenigstens eine Rüttelbacke (26, 26a, 26a1, 26a2, 26b, 26b1, 26b2, 26c, 26d) mit einer Rüttelbacken-Anlagefläche (28) und eine tiefer als ein oberer Bereich (30) der Rüttelbacke (26, 26a, 26a1, 26a2, 26b, 26b1, 26b2, 26c, 26d) angeordnete im Betrieb starre Positionierbacke (32, 32a1, 32a2, 32b1, 32b2, 32c, 32d) mit einer Positionierbacken-Anlagefläche (34) auf. Bei einer Ausgestaltungen der Positioniervorrichtung (20) greifen die Backen mit komplementären Vorsprungs-Rücksprungsausbildung (42) an den Anlageflächen (28, 34) ineinander. Alternativ oder zusätzlich ist vorgesehen, dass die Rüttelbacke (26, 26a, 26a1, 26a2, 26b, 26b1, 26b2, 26c, 26d) sich beim Schwingen entlang einer Bogenbahn (56) bewegt, wobei eine Tangente der Bogenbahn (56) auf der Positionierbacken-Anlagefläche (34) liegt.

### Bezugszeichenliste:

- 10: Stapelvorrichtung
- 12: Zellstapel
- 14: erste Wiederholkomponente
- 16: zweite Wiederholkomponente
- 18: Aufnahme für den Zellstapel
- 20: Positioniervorrichtung
- 22: Stützeinrichtung
- 24: Vibrationserzeuger
- 26: Rüttelbacke
- 26a: erste Rüttelbacke
- 26a1: erste Rüttelbacke
- 26a2: erste Rüttelbacke
- 26b: zweite Rüttelbacke
- 26b1: zweite Rüttelbacke
- 26b2: zweite Rüttelbacke
- 26c: dritte Rüttelbacke
- 26d: vierte Rüttelbacke
- 28: Rüttelbacken-Anlagefläche
- 30: oberer Bereich der Rüttelbacke
- 32: Positionierbacke
- 32a: erste Positionierbacke
- 32a1: erste Positionierbacke
- 32a2: erste Positionierbacke
- 32b: zweite Positionierbacke
- 32b1: zweite Positionierbacke
- 32b2: zweite Positionierbacke
- 32c: dritte Positionierbacke
- 32c1: dritte Positionierbacke
- 32c2: dritte Positionierbacke
- 32d: vierte Positionierbacke
- 32d1: vierte Positionierbacke
- 32d2: vierte Positionierbacke
- 34: Positionierbacken-Anlagefläche
- 36: Anordnung aus Rüttelbacke und Positionierbacke
- 36a: erste Anordnung
- 36a1: erste Anordnung
- 36a2: erste Anordnung
- 36b: zweite Anordnung
- 36b1: zweite Anordnung
- 36b2: zweite Anordnung
- 36c: dritte Anordnung
- 36d: vierte Anordnung
- 38: Vibrationseinheit
- 38a: erste Vibrationseinheit
- 38a1: erste Vibrationseinheit
- 38a2: erste Vibrationseinheit
- 38b: zweite Vibrationseinheit
- 38b1: zweite Vibrationseinheit
- 38b2: zweite Vibrationseinheit
- 38c: dritte Vibrationseinheit
- 38d: vierte Vibrationseinheit
- 40: Backenbereich
- 42: Vorsprungs-Rücksprungsausbildung
- 44: Kammstruktur
- 46: Rüttelbacken-Zahn
- 48: Rüttelbacken-Nut
- 50: Positionierbacken-Zahn
- 52: Positionierbacken-Nut
- 54: Endbereich der Rüttelbacken-Anlagefläche
- 56: Bogenbahn
- 58: Achse
- 60: Stapeltisch
- 62: Grundplatte
- 64: Einführschräge (Positionierbacke)
- 66: lineare Lagereinheit
- 68: abgerundete oder abgeschrägte Kante
- 70: Lagerung
- 72: Vorspannelement
- 74: erster Endanschlag
- 76: zweiter Endanschlag
- 78: Basisplatte
- 80: Gehäuse
- 82: Linearführung
- 84: Welle
- 86: Feder
- 88: Schwingplatte
- 90: Einstellschraube
- 92: Abstimmplatte
- 94: erster Schenkel
- 96: zweiter Schenkel
- 98: Steg
- 100: Körper der Positionsbacke
- 102: Steuerung
- 103: Langloch
- 104: Verbindungsstelle
- 105: Befestigungsplatte
- 106: Führung
- 108: Vibrationseinrichtung
- 110: Hubeinheit
- 112: Grundgestell
- 114: Basiseinheit
- 116: Schwingereinheit
- 118: Justage-Einheit
- 120: Wälzlager
- 122: Befestigungswelle
- 124: Lagerbock
- 126: Alignmentleiste
- 128: erste Druckfeder
- 130: Vorspanneinheit
- 132: Koppeleinheit
- 134: zweite Druckfeder
- 136: Sicherungsschraube
- 138: Kontermutter
- 140: Führungsschiene
- 142: Schwenkradius
- 144: tangentialer Übergang von Virbationseinrichtungs-Alignmentleiste und dem Alignment der Aufnahme der Stapelvorrichtung
- a: erste Seite (lange Seite)
- b: zweite Seite (lange Seite)
- c: dritte Seite (kurze Seite)
- d: vierte Seite (kurze Seite)

## Patentansprüche

1. Positioniervorrichtung (20) zum Positionieren aufeinander zu legender Wiederholkomponenten (14, 16) eines Zellstapels (12) für Batterie- oder Brennstoffzellen, umfassend eine mittels wenigstens eines Vibrationserzeugers (24) in Schwingung versetzbare Rüttelbacke (26, 26a, 26a1, 26a2, 26b, 26b1, 26b2, 26c, 26d) mit einer Rüttelbacken-Anlagefläche (28) zur Anlage an einen Rand der zu legenden Wiederholkomponente (14, 16), um diese rüttelnd zu zentrieren, und eine unter einem oberen Bereich (30) der Rüttelbacke (26, 26a, 26a1, 26a2, 26b, 26b1, 26b2, 26c, 26d) angeordnete im Betrieb starre Positionierbacke (32, 32a1, 32a2, 32b1, 32b2, 32c, 32d) mit einer Positionierbacken-Anlagefläche (34) zum Anlegen an einen Rand des zu bildenden Zellstapels (12) um diesen in Position zu halten, wobei
a) die Positionierbacke (32, 32a1, 32a2, 32b1, 32b2, 32c, 32d) und die Rüttelbacke (26, 26a, 26a1, 26a2, 26b, 26b1, 26b2, 26c, 26d) an einem die Anlageflächen (28, 34) bildenden Backenbereich (40) eine komplementäre Vorsprungs-Rücksprungsausbildung (42) aufweisen, mit der die Positionierbacke (32, 32a1, 32a2, 32b1, 32b2, 32c, 32d) und die Rüttelbacke (26, 26a, 26a1, 26a2, 26b, 26b1, 26b2, 26c, 26d) ineinandergreifen und/oder
b) die Rüttelbacke (26, 26a, 26a1, 26a2, 26b, 26b1, 26b2, 26c, 26d) dazu ausgebildet ist, einen nahe der Positionierbacken-Anlagefläche (34) angeordneten Endbereich (54) der Rüttelbacken-Anlagefläche (28) beim Schwingen entlang einer Bogenbahn (56) zu bewegen, wobei eine Tangente der Bogenbahn (56) auf der Positionierbacken-Anlagefläche (34) liegt.

2. Positioniervorrichtung (20) nach Anspruch 1, **dadurch gekennzeichnet, dass** die Vorsprungs-Rücksprungsausbildung (42)
2.1 eine Kammstruktur (44) mit zwischen Zähnen (46, 50) gebildeten Nuten (48, 52) ist, wobei Rüttelbacken-Zähne (46) in Positionierbacken-Nuten (52) eingreifen und Positionierbacken-Zähne (50) in Rüttelbacken-Nuten (48) eingreifen, wobei die Anlagenflächen (28, 34) zumindest teilweise an den Zähnen (46, 50) ausgebildet sind, und/oder
2.2 sich über die gesamte Breite der Anlageflächen (28, 34) erstreckt.

3. Positioniervorrichtung (20) nach einem der voranstehenden Ansprüche, **dadurch gekennzeichnet,**
**dass** sich eine erste Anordnung (36a, 36a1, 36a2) aus einer ersten Positionierbacke (32a1, 32a2) und einer ersten Rüttelbacke (26a, 26a1, 26a2) und eine zweite Anordnung (36b, 36b1, 36b2) aus einer zweiten Positionierbacke (32b1, 32b2) und einer zweiten Rüttelbacke (26b, 26b1, 26b2) an einem ersten Paar gegenüberliegenden Seiten (a, b) einer Aufnahme (18) für den Zellstapel (12) gegenüberstehen.

4. Positioniervorrichtung (20) nach Anspruch 3, **dadurch gekennzeichnet, dass** sich eine dritte Anordnung (36c) aus einer dritten Positionierbacke (32c) und einer dritten Rüttelbacke (26c) und eine vierte Anordnung (36d) aus einer vierten Positionierbacke (32d) und einer vierten Rüttelbacke (26d) an einem zweiten Paar gegenüberliegender Seiten (c, d) der Aufnahme (18) für den Zellstapel (12) gegenüberstehen.

5. Positioniervorrichtung (20) nach einem der Ansprüche 3 oder 4, **gekennzeichnet durch** wenigstens eines oder mehrere der Merkmale,
5.1 dass die Vibrationserzeuger (24) unterschiedlicher Anordnungen (36, 36a, 36a1, 36a2, 36b, 36b1, 36b2, 36c, 36d) einzeln und/oder unterschiedlich ansteuerbar sind,
5.2 dass eine Steuerung (102) vorgesehen und dazu ausgebildet ist, die Vibrationserzeuger (24) derart anzusteuern, dass
5.2a die Bewegung der Vibrationserzeuger (24) paarweise gegenläufig erfolgt oder
5.2b die Bewegung der Vibrationserzeuger (24) paarweise gleichläufig erfolgt,
5.2c einzelne Vibrationserzeuger (24) inaktiv sind.

6. Positioniervorrichtung (20) nach einem der voranstehenden Ansprüche, **dadurch gekennzeichnet,**
**dass** die Rüttelbacke (26, 26a, 26b, 26c, 26d) im Querschnitt U-förmig ausgebildet ist mit einem ersten Schenkel (94), an dem die Rüttelbacken-Anlagefläche (28) und die Vorsprung-Rücksprung-Ausbildung (42) ausgebildet sind, und einem zweiten Schenkel (96), der an den Vibrationserzeuger (24) angeschlossen ist, und einem Steg (98), der einen Körper (100) der Positionierbacke (32, 32a1, 32a2, 32b1, 32b2, 32c, 32d) übergreift.

7. Positioniervorrichtung (20) nach einem der voranstehenden Ansprüche, **dadurch gekennzeichnet,**
**dass** die Positionierbacke (32, 32a1, 32a2, 32b1, 32b2, 32c, 32d)
7.1 an einem oberen Endbereich oberhalb der Positionierbacken-Anlagefläche (34) zum Bilden einer Einführschräge (64) abgeschrägt oder abgerundet ist oder
7.2 an einem oberen Endbereich der Positionierbacken-Anlagefläche (34) entsprechend bündig zu oder ausgerichtet mit der Bogenbahn (56) abgerundet ist,
7.3 blockförmig oder leistenförmig ausgebildet ist, und/oder
7.4 derart ausgebildet ist, dass an einer einer Aufnahme (18) zur Aufnahme des Zellstapels (12) zugewandten Seitenfläche die Vorsprung-Rücksprungausbildung (42) ausgebildet ist, und/oder
7.5 sich entlang einer Höhenrichtung zur Führung der Kanten der Wiederholkomponenten (14, 16) in dem Zellstapel (12) beim Höhennachführen in der Aufnahme (18) erstreckt.

8. Positioniervorrichtung (20) nach einem der voranstehenden Ansprüche, **dadurch gekennzeichnet,**
**dass** die Rüttelbacke (26, 26a, 26a1, 26a2, 26b, 26b1, 26b2, 26c, 26d)
8.1 zwischen einer ersten Endposition, in der die Rüttelbacken-Anlagefläche (28) und die Positionierbacken-Anlagefläche (34) zueinander ausgerichtet sind und einer zweiten Endposition, in der die Rüttelbacken-Anlagefläche (28) zumindest bereichsweise weiter entfernt von einer Aufnahme (18) für den Zellstapel (12) ist als die Positionierbacken-Anlagefläche (34), schwingt und/oder
8.2 an einer Lagerung (70), die ein Vorspannelement (72) und wenigstens einen vorzugsweise einstellbaren Endanschlag (74, 76) aufweist, zwischen zwei Endpositionen bewegbar gelagert ist und/oder
8.3 an wahlweise veränderbaren Verbindungsstellen (104) mit dem Vibrationserzeuger (24) oder wahlweise mit mehreren Vibrationserzeugern (24) verbindbar ist, um Eigenfrequenzen einzustellen, und/oder
8.4a senkrecht zu der Rüttelbacken-Anlagefläche (28) linear hin und her schwingbar ist oder
8.4b um eine horizontal und parallel zur Rüttelbacken-Anlagefläche (28) ausgerichtete Achse (58) herum schwingt oder
8.4c sich beim Schwingen um eine horizontal und parallel zur Rüttelbacken-Anlagefläche ausgerichtete Achse (58) herum hin und her dreht.

9. Stapelvorrichtung (10) zum Bilden eines Zellstapels (12) für eine Batteriezelle oder Brennstoffzelle aus aufeinander zu legenden Wiederholkomponenten (14, 16), umfassend wenigstens eine Positioniervorrichtung (20) nach einem der voranstehenden Ansprüche und eine Aufnahme (18) mit einer sich in Höhenrichtung bewegbaren Stützeinrichtung (22) zum Abstützen und zur Höhenanpassung des Zellstapels (12) beim Stapeln.

10. Stapelverfahren zum Bilden eines Zellstapels (12) für eine Batteriezelle oder Brennstoffzelle aus mehreren aufeinander zu legenden Wiederholkomponenten (14, 16) umfassend
a) Vorsehen einer Stapelvorrichtung (10) nach Anspruch 9,
b) Ablegen einer Wiederholkomponente (14, 16),
c) Zentrieren der Wiederholkomponente (14, 16) mittels Schwingen der Rüttelbacke (26, 26a, 26a1, 26a2, 26b, 26b1, 26b2, 26c, 26d), um sie in Anlage an die Positionerbacken-Anlagefläche (34) zu bringen,
e) Wiederholen der Schritte a) bis c) mit weiteren Wiederholkomponenten (14, 16), um so den Zellstapel (12) zu bilden.

11. Stapelverfahren nach Anspruch 10, **gekennzeichnet durch** den nach Schritt c) durchzuführenden Schritt:
d) Abwärtsbewegen der Stützeinrichtung (22),
wobei in Schritt e) die Schritte a) bis d) mit den weiteren Wiederholkomponenten (14, 16) wiederholt werden.

## Claims

1. Positioning device (20) for positioning repeating components (14, 16) of a cell stack (12) for battery or fuel cells to be placed one on top of the other, comprising a vibrating jaw (26, 26a, 26a1, 26a2, 26b, 26b1, 26b2, 26c, 26d) which can be set in vibration by means of at least one vibration generator (24) and has a vibrating jaw contact surface (28) for contacting an edge of the repeating component (14, 16) to be laid for vibrationally centering the same, and a positioning jaw (32, 32a1, 32a2, 32b1, 26b2, 26c, 26d) which is rigid in operation and is disposed below an upper region (30) of the vibrating jaw (26, 26a1, 26a2, 26b, 26b1, 26b2, 26c, 26d) and has a positioning jaw contact surface (34) for contacting an edge of the cell stack (12) to be formed for holding the same in position, wherein
a) the positioning jaw (32, 32a1, 32a2, 32b1, 32b2, 32c, 32d) and the vibrating jaw (26, 26a, 26a1, 26a2, 26b, 26b1, 26b2, 26c, 26d) have, on a jaw area (40) forming the contact surfaces (28, 34), a complementary protrusion-recess feature (42) by which the positioning jaw (32, 32a1, 32a2, 32b1, 32b2, 32c, 32d) and the vibrating jaw (26, 26a, 26a1, 26a2, 26b1, 26b2, 26c, 26d) engage with each other and/or
b) the vibrating jaw (26, 26a, 26a1, 26a2, 26b, 26b1, 26b2, 26c, 26d) is designed to move an end region (54) of the vibrating jaw contact surface (28) arranged near the positioning jaw contact surface (34) along an arcuate path (56) during oscillation, a tangent of the arcuate path (56) lying on the positioning jaw contact surface (34).

2. Positioning device (20) according to claim 1, **characterized in that** the protrusion-recess feature (42)
2.1 is a comb structure (44) with grooves (48, 52) formed between teeth (46, 50), wherein vibrating jaw teeth (46) engage positioning jaw grooves (52) and positioning jaw teeth (50) engage vibrating jaw grooves (48), wherein the contact surfaces (28, 34) are formed at least partially on the teeth (46, 50), and/or
2.2 extends over the entire width of the contact surfaces (28, 34).

3. Positioning device (20) according to any of the preceding claims, **characterized in that**
a first arrangement (36a, 36a1, 36a2) of a first positioning jaw (32a1, 32a2) and a first vibrating jaw (26a, 26a1, 26a2), and a second arrangement (36b, 36b1, 36b2) of a second positioning jaw (32b1, 32b2) and a second vibrating jaw (26b, 26b1, 26b2) oppose each other on a first pair of opposite sides (a, b) of a receptacle (18) for the cell stack (12).

4. Positioning device (20) according to claim 3, **characterized in that** a third arrangement (36c) of a third positioning jaw (32c) and a third vibrating jaw (26c), and a fourth arrangement (36d) of a fourth positioning jaw (32d) and a fourth vibrating jaw (26d) oppose each other on a second pair of opposite sides (c, d) of the receptacle (18) for the cell stack (12).

5. Positioning device (20) according to any of claims 3 or 4, **characterized by** at least one or more of the features
5.1 that the vibration generators (24) of different arrangements (36, 36a, 36a1, 36a2, 36b, 36b1, 36b2, 36c, 36d) are individually and/or differently controllable,
5.2 that a controller (102) is provided and designed to control the vibration generators (24) in such a way that
5.2a the movement of the vibration generators (24) takes place in pairs in opposite directions or
5.2b the movement of the vibration generators (24) takes place in pairs in the same direction,
5.2c individual vibration generators (24) are inactive.

6. Positioning device (20) according to any of the preceding claims, **characterized in that**
the vibrating jaw (26, 26a, 26b, 26c, 26d) is U-shaped in cross-section with a first leg (94), on which the vibrating jaw contact surface (28) and the protrusion-recess feature (42) are formed, and a second leg (96) connected to the vibration generator (24), and a web (98) which overlaps a body (100) of the positioning jaw (32, 32a1, 32a2, 32b1, 32b2, 32c, 32d).

7. Positioning device (20) according to any of the preceding claims, **characterized in that**
the positioning jaw (32, 32a1, 32a2, 32b1, 32b2, 32c, 32d)
7.1 is chamfered or rounded at an upper end region above the positioning jaw contact surface (34) to form an insertion slope (64), or
7.2 is rounded at an upper end region of the positioning jaw contact surface (34) correspondingly flush or aligned with the arcuate path (56),
7.3 is block-shaped or strip-shaped, and/or
7.4 is formed in such a way that the protrusion-recess feature (42) is formed on a side surface facing a receptacle (18) for receiving the cell stack (12), and/or
7.5 extends along a height direction for guiding the edges of the repeating components (14, 16) in the cell stack (12) during height tracking in the receptacle (18).

8. Positioning device (20) according to any of the preceding claims, **characterized in that**
the vibrating jaw (26, 26a, 26a1, 26a2, 26b, 26b1, 26b2, 26c, 26d)
8.1 oscillates between a first end position in which the vibrating jaw contact surface (28) and the positioning jaw contact surface (34) are aligned with respect to one another, and a second end position in which the vibrating jaw contact surface (28) is further away from a receptacle (18) for the cell stack (12) than the positioning jaw contact surface (34), at least in regions, and/or
8.2 is supported on a bearing (70), which has a preloading element (72) and at least one preferably adjustable end stop (74, 76), such that it can be moved between two end positions, and/or
8.3 can be connected to the vibration generator (24) or optionally to several vibration generators (24) at selectively variable connection points (104) in order to set natural frequencies, and/or
8.4a can be oscillated linearly back and forth perpendicular to the vibrating jaw contact surface (28), or
8.4b oscillates about an axis (58) aligned horizontally and parallel to the vibrating jaw contact surface (28), or
8.4c turns back and forth about an axis (58) aligned horizontally and parallel to the vibrating jaw contact surface during oscillation.

9. Stacking device (10) for forming a cell stack (12) for a battery cell or fuel cell from repeating components (14, 16) to be placed one on top of the other, comprising at least one positioning device (20) according to any one of the preceding claims and a receptacle (18) with a supporting device (22) movable in height direction for supporting and adjusting the height of the cell stack (12) during stacking.

10. Stacking method for forming a cell stack (12) for a battery cell or fuel cell from a plurality of repeating components (14, 16) to be placed one on top of the other comprising
a) providing a stacking device (10) according to claim 9,
b) depositing a repeating component (14, 16),
c) centering the repeating component (14, 16) by vibrating the vibrating jaw (26, 26a, 26a1, 26a2, 26b, 26b1, 26b2, 26c, 26d) to bring it into contact with the positioning jaw contact surface (34),
e) repeating steps a) through c) with additional repeating components (14, 16) so as to form the cell stack (12).

11. Stacking method according to claim 10, **characterized by** the step to be performed after step c):
d) moving the supporting device (22) downward,
wherein steps a) to d) are repeated with the further repeating components (14, 16) in step e).

## Revendications

1. Dispositif de positionnement (20) pour positionner les composants répétitifs (14, 16) d'une pile de cellules (12) pour batteries ou piles à combustible à placer les uns sur les autres, comprenant une mâchoire vibrante (26, 26a, 26a1, 26a2, 26b, 26b1, 26b2, 26c, 26d) qui peut être mise en vibration au moyen d'au moins un générateur de vibrations (24) et qui a une surface de contact de mâchoire vibrante (28) pour entrer en contact avec un bord du composant répétitif (14, 16) à poser pour le centrer par vibration, et une mâchoire de positionnement (32, 32a1, 32a2, 32b1, 26b2, 26c, 26d) rigide en fonctionnement et disposée sous une zone supérieure (30) de la mâchoire vibrante (26, 26a1, 26a2, 26b, 26b1, 26b2, 26c, 26d) et ayant une surface de contact de mâchoire de positionnement (34) pour contacter un bord de la pile de cellules (12) à former pour la maintenir en position, dans lequel
a) la mâchoire de positionnement (32, 32a1, 32a2, 32b1, 32b2, 32c, 32d) et la mâchoire vibrante (26, 26a, 26a1, 26a2, 26b, 26b1, 26b2, 26c, 26d) présentent, sur une zone de mâchoire (40) formant les surfaces de contact (28, 34), une caractéristique complémentaire de saillie et d'évidement (42) par laquelle la mâchoire de positionnement (32, 32a1, 32a2, 32b1, 32b2, 32c, 32d) et la mâchoire vibrante (26, 26a, 26a1, 26a2, 26b1, 26b2, 26c, 26d) s'engagent l'une dans l'autre et/ou
b) la mâchoire vibrante (26, 26a, 26a1, 26a2, 26b, 26b1, 26b2, 26c, 26d) est conçue pour déplacer une zone d'extrémité (54) de la surface de contact de la mâchoire vibrante (28) située à proximité de la surface de contact de la mâchoire de positionnement (34) le long d'une trajectoire en arc de cercle (56) pendant l'oscillation, une tangente de la trajectoire en arc de cercle (56) se trouvant sur la surface de contact de la mâchoire de positionnement (34).

2. Dispositif de positionnement (20) selon la revendication 1, **caractérisé en ce que** la caractéristique de saillie et d'évidement (42)
2.1 est une structure en peigne (44) avec des rainures (48, 52) formées entre les dents (46, 50), dans laquelle les dents de la mâchoire vibrante (46) engagent dans les rainures de la mâchoire de positionnement (52) et les dents de la mâchoire de positionnement (50) engagent dans les rainures de la mâchoire vibrante (48), les surfaces de contact (28, 34) étant formées au moins en partie sur les dents (46, 50), et/ou
2.2 s'étend sur toute la largeur des surfaces de contact (28, 34).

3. Dispositif de positionnement (20) selon l'une quelconque des revendications précédentes, **caractérisé en ce que**
un premier agencement (36a, 36a1, 36a2) d'une première mâchoire de positionnement (32a1, 32a2) et d'une première mâchoire vibrante (26a, 26a1, 26a2), et un deuxième agencement (36b, 36b1, 36b2) d'une seconde mâchoire de positionnement (32b1, 32b2) et d'une seconde mâchoire vibrante (26b, 26b1, 26b2) s'opposent sur une première paire de côtés opposés (a, b) d'un réceptacle (18) pour la pile de cellules (12).

4. Dispositif de positionnement (20) selon la revendication 3, **caractérisé en ce qu'**un troisième agencement (36c) d'une troisième mâchoire de positionnement (32c) et d'une troisième mâchoire vibrante (26c), et un quatrième agencement (36d) d'une quatrième mâchoire de positionnement (32d) et d'une quatrième mâchoire vibrante (26d) s'opposent sur une deuxième paire de côtés opposés (c, d) du réceptacle (18) de la pile de cellules (12).

5. Dispositif de positionnement (20) selon l'une quelconque des revendications 3 ou 4, **caractérisé par** au moins une ou plusieurs des caractéristiques suivantes
5.1 les générateurs de vibrations (24) de différents agencements (36, 36a, 36a1, 36a2, 36b, 36b1, 36b2, 36c, 36d) peuvent être commandés individuellement et/ou différemment,
5.2 un dispositif de commande (102) est prévu et conçu pour commander les générateurs de vibrations (24) de manière à ce que
5.2a le mouvement des générateurs de vibrations (24) s'effectue par paires dans des directions opposées ou
5.2b le mouvement des générateurs de vibrations (24) s'effectue par paires dans la même direction,
5.2c chaque générateur de vibrations (24) soit inactif.

6. Dispositif de positionnement (20) selon l'une quelconque des revendications précédentes, **caractérisé en ce que**
la mâchoire vibrante (26, 26a, 26b, 26c, 26d) a une section transversale en forme de U avec une première branche (94), sur laquelle sont formées la surface de contact de la mâchoire vibrante (28) et la caractéristique de saillie et d'évidement (42), et une deuxième branche (96) reliée au générateur de vibrations (24), et une âme (98) qui recouvre un corps (100) de la mâchoire de positionnement (32, 32a1, 32a2, 32b1, 32b2, 32c, 32d).

7. Dispositif de positionnement (20) selon l'une quelconque des revendications précédentes, **caractérisé en ce que**
la mâchoire de positionnement (32, 32a1, 32a2, 32b1, 32b2, 32c, 32d)
7.1 est chanfreinée ou arrondie à une extrémité supérieure au-dessus de la surface de contact de la mâchoire de positionnement (34) pour former une pente d'insertion (64), ou
7.2 est arrondi à une extrémité supérieure de la surface de contact de la mâchoire de positionnement (34) de manière correspondante à fleur de ou alignée avec la trajectoire en arc de cercle (56),
7.3 est en forme de bloc ou de bande, et/ou
7.4 est formé de telle sorte que la caractéristique de saillie et d'évidement (42) est formée sur une surface latérale faisant face à un réceptacle (18) destiné à recevoir la pile de cellules (12), et/ou
7.5 s'étend le long d'une direction de hauteur pour guider les bords des composants répétitifs (14, 16) dans la pile de cellules (12) pendant le suivi de la hauteur dans le réceptacle (18).

8. Dispositif de positionnement (20) selon l'une quelconque des revendications précédentes, **caractérisé en ce que**
la mâchoire vibrante (26, 26a, 26a1, 26a2, 26b, 26b1, 26b2, 26c, 26d)
8.1 oscille entre une première position finale dans laquelle la surface de contact de la mâchoire vibrante (28) et la surface de contact de la mâchoire de positionnement (34) sont alignées l'une par rapport à l'autre, et une deuxième position finale dans laquelle la surface de contact de la mâchoire vibrante (28) est plus éloignée d'un réceptacle (18) pour la pile de cellules (12) que la surface de contact de la mâchoire de positionnement (34), au moins par zones, et/ou
8.2 repose sur un palier (70) qui comporte un élément de pré-tension (72) et au moins une butée (74, 76), de préférence réglable, de sorte qu'il peut être déplacé entre deux positions finales, et/ou
8.3 peut être relié au générateur de vibrations (24) ou éventuellement à plusieurs générateurs de vibrations (24) à des points de connexion (104) variables de manière sélective afin de régler les fréquences naturelles, et/ou
8.4a peut osciller linéairement d'avant en arrière perpendiculairement à la surface de contact de la mâchoire vibrante (28), ou
8.4b oscille autour d'un axe (58) aligné horizontalement et parallèlement à la surface de contact de la mâchoire vibrante (28), ou
8.4c tourne d'avant en arrière autour d'un axe (58) aligné horizontalement et parallèlement à la surface de contact de la mâchoire vibrante pendant l'oscillation.

9. Dispositif d'empilage (10) pour former une pile de cellules (12) pour une cellule de batterie ou une pile à combustible à partir de composants répétitifs (14, 16) à placer l'un sur l'autre, comprenant au moins un dispositif de positionnement (20) selon l'une quelconque des revendications précédentes et un réceptacle (18) avec un dispositif de support (22) mobile dans la direction de la hauteur pour supporter et ajuster la hauteur de la pile de cellules (12) pendant l'empilage.

10. Procédé d'empilage pour former une pile de cellules (12) pour une cellule de batterie ou une pile à combustible à partir d'une pluralité de composants répétitifs (14, 16) à placer l'un sur l'autre, comprenant
a) fournir un dispositif d'empilage (10) selon la revendication 9,
b) déposer un composant répétitif (14, 16),
c) centrer le composant répétitif (14, 16) en faisant vibrer la mâchoire vibrante (26, 26a, 26a1, 26a2, 26b, 26b1, 26b2, 26c, 26d) pour l'amener en contact avec la surface de contact de la mâchoire de positionnement (34),
e) répéter les étapes a) à c) avec des composants répétitifs supplémentaires (14, 16) de manière à former la pile de cellules (12).

11. Procédé d'empilage selon la revendication 10, **caractérisée par** l'étape à effectuer après l'étape c):
d) déplacer le dispositif de support (22) vers le bas,
les étapes a) à d) étant répétées avec les autres composants répétitifs (14, 16) à l'étape e).
